(19) Europäisches Patentamt
European Patent Office
Office européen des brevets

(11) **EP 1 383 667 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**28.07.2010 Patentblatt 2010/30**

(45) Hinweis auf die Patenterteilung:
**08.12.2004 Patentblatt 2004/50**

(21) Anmeldenummer: **02742930.7**

(22) Anmeldetag: **30.04.2002**

(51) Int Cl.:
***B60R 21/01*** *(2006.01)*

(86) Internationale Anmeldenummer:
**PCT/EP2002/004768**

(87) Internationale Veröffentlichungsnummer:
**WO 2002/087928 (07.11.2002 Gazette 2002/45)**

(54) **VORRICHTUNG UND VERFAHREN ZUR ERFASSUNG UND AUFBEREITUNG VON AUF EINEN FAHRZEUGSITZ WIRKENDEN GEWICHTSKRÄFTEN**

DEVICE AND METHOD FOR DETECTING AND PROCESSING FORCES DUE TO WEIGHT THAT ACT UPON A VEHICLE SEAT

DISPOSITIF ET PROCEDE POUR LA DETECTION ET LE TRAITEMENT DE FORCES DE POIDS AGISSANT SUR UN SIEGE DE VEHICULE

(84) Benannte Vertragsstaaten:
**AT BE CH CY DE DK ES FI FR GB GR IE IT LI LU MC NL PT SE TR**

(30) Priorität: **01.05.2001 DE 10120978**

(43) Veröffentlichungstag der Anmeldung:
**28.01.2004 Patentblatt 2004/05**

(73) Patentinhaber: **BAG Bizerba Automotive GmbH
72336 Balingen (DE)**

(72) Erfinder:
• **SELIG, Klaus, Peter
72336 Balingen-Weilstetten (DE)**
• **WURSTER, Klaus
72124 Pliezhausen (DE)**

(74) Vertreter: **Wössner, Gottfried
HOEGER, STELLRECHT & PARTNER
Patentanwälte
Uhlandstrasse 14 c
70182 Stuttgart (DE)**

(56) Entgegenhaltungen:
**WO-A-01/12473       WO-A1-01//18508
US-A- 5 739 757       US-A- 6 070 115**

• **PATENT ABSTRACTS OF JAPAN vol. 1999, no. 02, 26. Februar 1999 (1999-02-26) & JP 10 297334 A (TOYOTA MOTOR CORP), 10. November 1998 (1998-11-10)**

**EP 1 383 667 B2**

**Beschreibung**

Die Erfindung betrifft eine Vorrichtung zur Erfassung und Aufbereitung von auf einen Fahrzeugsitz wirkenden Gewichtskräften, umfassend am Fahrzeugsitz angeordnete Sensoren, welche jeweils ein der Gewichtskraft entsprechendes Wägesignal erzeugen, und eine elektronische Auswerteschaltung, welche die Wägesignale empfängt.

Eine solche Vorrichtung ist beispielsweise aus der US 5,739 757 bekannt.

Im Zuge der serienmäßigen Einführung von Airbags für den Beifahrersitz in Kraftfahrzeugen stellt sich das Problem der Erkennung der Sitzplatzbelegung, so dass der Beifahrer-Airbag nur in solchen Fällen zur Zündung freigegeben ist, in denen der Sitzplatz belegt ist. Ein Zünden des Beifahrer-Airbags bei nicht belegtem Beifahrersitz hat nicht nur zur Folge, dass im Falle eines Unfalles unnötigerweise im Fahrzeug ein zusätzlicher Druckanstieg durch das Zünden des Beifahrer-Airbags verursacht wird, sondern durch die Integration des Beifahrer-Airbags in das Armaturenbrett sind nachfolgend einer Zündung des Airbags auch erhebliche Reparaturmaßnahmen im Innenraum des Fahrzeuges notwendig.

Verschiedene Probleme, die beim Zünden von Airbags beobachtet wurden, wenn Kleinkinder oder auch Jugendliche auf dem Beifahrersitz mitgenommen werden, haben letztendlich zu der Forderung geführt, dass ein Airbag im Falle eines Unfalles auf die auf dem Fahrzeugsitz sitzende Person angepasst in Funktion gesetzt werden muss.

Dadurch stellt sich das Problem der Ermittlung der notwendigen Daten für eine bedarfsgerechte Zündung des Airbags.

Ein möglicher Ansatzpunkt besteht darin, das Gewicht des jeweiligen Fahrzeuginsassen zu erfassen, wobei von einer Gewichtsbestimmung abgeleitet dann auf die Größe und körperliche Robustheit des Insassen geschlossen wird.

Das US-Patent 5,739,757 schlägt vor über in dem Sitzkissen eines Fahrzeugsitzes eingearbeitete Sensoren das Gewicht des Fahrzeuginsassen zu bestimmen und nur im Falle, dass unteres Gewichtslimit überschritten wird, den Airbag in Unfallsituationen zu zünden. Darüber hinaus kann die Position des Insassen auf dem Sitz bestimmt werden, so dass der Airbag abgeschaltet werden kann, falls sich der Insasse zu dicht am Airbag für eine gefahrlose Zündung aufhält. Als Sensoren werden dabei ferromagnetische Elemente empfohlen, welche bei der hier auftretenden horizontalen Zugbelastung ihre magnetische Permeabilität ändern.

Nachteilig bei dieser Lösung ist, dass sich Änderungen in der Federkonstante der Sitzfederung (Alterung, Gebrauch) zu einer zusätzlichen Nullpunktsdrift des Wägesignals der Sensorelemente führen. Darüber hinaus treten erhebliche Messfehler beim Beschleunigen des Fahrzeugs oder bei dessen Abbremsen auf, die aufwändig korrigiert werden müssen. Negativ bemerkbar macht sich bei diesen Messfehlern, dass sie Störsignalen mit einer langen Periode/niedriger Frequenz entsprechen. Im Ergebnis muss eine zeitaufwändigere Korrektur vorgenommen werden, welches das Messsystem von Haus aus träge macht. Bei schräg stehendem Fahrzeug wird darüber hinaus ein großer Messfehler erhalten, der nur unter erheblichem Aufwand korrigierbar wäre.

Die DE 38 09 074 A1 schlägt vor über die Anordnung von Gewichtssensoren im Bereich der Sitzschiene des Fahrzeugsitzes die Sitzposition oder Schwerpunktlage des Fahrzeuginsassen zu bestimmen und je nach Sitzposition zu entscheiden, ob der Airbag in einer Unfallsituation teilweise oder voll gezündet und zum Entfalten gebracht wird. Hier werden ganz allgemein induktive Sensoren empfohlen, wobei zum eigentlichen Sensoraufbau keine Empfehlung gegeben wird.

Nachteilig bei dieser Lösung ist vor allem, dass hier die Sitzschienen höher über dem Fahrzeugboden angeordnet werden müssen als es ohne die Sensoren sonst notwendig wäre. Dies beeinträchtigt aber die Kopffreiheit für die Insassen des Fahrzeugs.

In der Wägetechnik ist eine Vielzahl verschiedener Kraftmesszellen bekannt, deren Wägesignal aufbereitet und zur Anzeige gebracht wird.

Die Kraftmesszellen umfassen einen Kraftaufnehmer und ein Sensorelement, welches bei Belastung des Kraftaufnehmers ein Messsignal liefert.

Bekannte Kraftaufnehmer beruhen in vielen Fällen darauf, dass die Verformung als Oberflächendehnung erfasst wird. Typische Vertreter sind Dehnungsmessstreifen-Aufnehmer, bei denen die bei der Verformung auftretende Oberflächendehnung in eine elektrische Widerstandsänderung umgeformt wird.

Diese Dehnungsmessstreifen-Aufnehmer erreichen sehr hohe Genauigkeiten, sind aber nur unter hohem Aufwand gegen Umgebungseinflüsse zu schützen, da sich die dehnungsempfindlichen Sensorelemente direkt auf dem elastisch verformenden Teil befinden und eine Abdeckung der Sensoren mit Kraftnebenschlüssen verbunden ist, welche sich unmittelbar negativ auf die Eigenschaften des Aufnehmers auswirken.

Bei kapazitiv arbeitenden Kraftmesszellen ändert sich durch die elastische Verformung des verformbaren Teils der Abstand zweier Kondensatorplatten und damit deren Kapazität, während bei den eingangs beschriebenen induktiv arbeitenden Kraftaufnehmern durch die Verformung die räumliche Verteilung eines magnetischen Wechselfeldes verändert wird, was zu einer Änderung der Induktivität einer Aufnehmerspule des Sensorelements führt.

Aus der DE 44 20 691 C1 sind induktiv arbeitende Kraftmesszellen bekannt, welche speziell für Anwendungen in der Wägetechnik konzipiert sind. Diese erweisen sich bei extremen Umgebungsbedingungen, insbesondere wie sie z. B. in einem Kraftfahrzeug vorkommen, als ungeeignet, da zu störungsanfällig.

Messtechnisch gesehen ist das Fahrzeuginnere extrem problembehaftet, da nicht nur Störsignale der Motorzündung (elektromagnetische Felder mit hohen Feldstärken) in erheblichem Umfang auftreten und signaltechnisch zu eliminieren sind, sondern auch bezüglich der Funktionsfähigkeit einzusetzender Sensoren mit extremen Vibrationen, Temperaturbedingungen in einem Bereich von beispielsweise -40 °C bis +85 °C, schnelle Temperaturwechsel sowie bis zum Taupunkt reichende Luftfeuchtigkeit zu berücksichtigen sind.

Ferner ist zu berücksichtigen, dass auf den Sitz nicht nur die Gewichtskräfte der Insassen wirken sondern beim Beschleunigen und insbesondere beim plötzlichen Abbremsen des Fahrzeugs Kräfte auftreten, die ein Vielfaches größer sind, ganz zu schweigen von den in einer Unfallsituation auftretenden Kräfte, die ebenfalls nicht zu einem Fehlverhalten der Sensoren führen dürfen.

Dazu kommen die in heutigen Kraftfahrzeugen vorgesehenen verschiedenen Verstellmöglichkeiten für einen Fahrzeugsitz, die das Messergebnis auch nur innerhalb definierter Grenzen beeinflussen dürfen.

Aufgabe der Erfindung ist es deshalb, eine Vorrichtung gemäß der US 6,070,115 so auszubilden, dass diese vor allem in messtechnisch sehr schwierigen Verhältnissen und insbesondere bei den sonstigen Besonderheiten der Umgebung innerhalb eines Fahrzeuges einsetzbar ist und deren Wägesignal hiervon im wesentlichen unbeeinflusst ist und über lange Zeiträume einen verlässlichen Parameter für die Airbag-Ansteuerung liefern kann.

Diese Aufgabe wird bei der eingangs genannten Vorrichtung erfindungsgemäß mit den Merkmalen gemäß Anspruch 1 gelöst.

Bedingt durch das Beschleunigen, das Abbremsen, von Straßenunebenheiten verursachten Stößen oder durch Vibrationen unterliegen die von der einzelnen Kraftmesszelle in einem Fahrzeug erfassten Gewichtswerte ständigen Änderungen. Die Auswerteschaltung übernimmt dabei die Aufgabe, die von den Kraftmesszellen gelieferten Wägesignale an Hand vorgegebener Kriterien zu bewerten. Bei der Bewertung fließen Langzeitmittelwerte, Minima und Maxima sowie der zeitliche Verlauf der Änderungen ein.

Die Bestimmung bzw. Lokalisierung des Schwerpunktes gibt wichtige Anhaltspunkte für die Sitzhaltung des Insassen und eine mögliche Gefährdungssituation desselben im Falle der Zündung des Airbags.

Das Ergebnis der Schwerpunktsbestimmung wird von der Korrekturfunktion der Auswerteschaltung genutzt, um den Einfluss von Kraftnebenschlüssen durch am Fahrzeugboden aufgestellte Beine und/oder am Lenkrad oder auf Armlehnen aufliegenden Armen des Insassen bei der Bildung des Ausgangssignals zu berücksichtigen.

Durch das Aufstellen der Beine auf dem Fahrzeugboden bzw. das Auflegen der Arme auf Lenkrad oder Armstützen ändern sich sowohl das gesamte von den Kraftmesszellen erfasste Gewicht als auch die Gewichtsverteilung auf Grund der Verlagerung des Schwerpunktes. Über die anteiligen Kräfte, die auf jede der Kraftmesszellen wirken, ist also die Verlagerung des Schwerpunktes nachweisbar.

Je weiter sich beispielsweise der Schwerpunkt nach vorn in Richtung Sitzkante verlagert, desto größer wird der Gewichtsanteil, der durch das Aufstellen der Beine auf dem Fahrzeugboden durch die Kraftmesszellen nicht mehr erfassbar wird. Wird der Zusammenhang zwischen Schwerpunktslage, Sitzgeometrie und Gewichtsverteilung auf die einzelnen Kraftmesszellen ermittelt, so kann an Hand solcher Daten eine annähernde Korrektur solcher Kraftnebenschlüsse erfolgen.

Die im Rahmen der vorliegenden Erfindung bevorzugt verwendeten, induktiv arbeitenden Kraftmesszellen lassen sich sehr störungsunanfällig und vor allem auch sehr robust bauen, was zum Beispiel bei einem Einbau in einen Kraftfahr-zeugsitz von besonderer Bedeutung ist, da auf den Sitz beim Beschleunigen und Abbremsen bereits im normalen Fahrbetrieb hohe Kräfte einwirken können. Im Falle eines Unfalles vervielfachen sich die auf die Kraftmesszelle einwirkenden Kräfte.

Nachdem die Vorrichtung über Jahre hinweg in einem Fahrzeugsitz eingebaut und funktionsfähig gehalten werden muss, muss die Auswerteschaltung mit einer funktionsautomatischen Nullpunktsdriftkorrektur versehen sein, so dass auch nach Jahren noch hiervon unbeeinflusste Wägesignale erhalten werden können.

Von Bedeutung ist in diesem Zusammenhang, dass die Vorrichtung eine Auswerteschaltung mit einem Diskriminator aufweist, der der Unterscheidung von Wägesignaldrift und zeitlich begrenzten Geringbelastungen wie z. B. dem Auflegen von Aktentaschen etc. auf den Fahrzeugsitz dient.

Bevorzugt wird ein nach dem Wirbelstromprinzip arbeitendes Sensorelement verwendet. Weiter bevorzugt sind solche Sensorelemente, bei denen die Wägesignale frequenzanalog anfallen, da hier ein besonders großes und störsicheres Signal erhalten wird. Diese Sensorelemente haben den weiteren Vorteil, dass die Wägesignale einfach auswertbar und weiterverarbeitbar sind.

Bevorzugt werden die Sensorelemente der Kraftmesszellen in einer Ausnehmung im Messabschnitt des Kraftaufnehmers angeordnet, wodurch man einen Schutz gegen mechanische. Einwirkung auf das Sensorelement erhält. Da der Kraftaufnehmer ferner in der Regel aus einem metallischen Material, z. B. Stahl oder Aluminium, hergestellt ist, ergibt sich dadurch auch eine Abschirmung gegen elektromagnetische Störfelder.

Durch die Verkapselung lassen sich Einflüsse von Temperatur und Luftfeuchtigkeit zurückdrängen oder gar gänzlich ausschalten.

Bevorzugt wird die Ausnehmung in dem nicht verformenden Teil des Kraftaufnehmers angeordnet. Dies lässt eine einfache Kabelführung der Signalkabel der Messzelle zu und vermindert eine Beeinflussung des Wägesignals durch dieselben. Die signalgebende Fläche ist dann an dem elastisch verformenden Teil im Bereich des Messabschnitts angeordnet.

Zur Verkapselung des Sensorelements bieten sich verschiedene Lösungen an.

Bei einer bevorzugten Variante wird das in der Ausnehmung angeordnete Sensorelement mit einem aushärtbaren Material vergossen.

Bei einer anderen bevorzugten Variante wird das Sensorelement gesondert in einem separaten Gehäuse gekapselt und zusammen mit dem Gehäuse in der Ausnehmung eingesetzt und fixiert.

Für eine einfache und zuverlässige Montage, auch im Falle eines eventuell notwendigen Austauschs, wird die Ausnehmung mit einem Anschlag versehen, der eine exakte Positionierung der Sensorelements in bezüglich des Abstandes zur Signal gebenden Fläche erlaubt.

Eine fertigungstechnisch einfache Lösung stellt die Ausbildung der Ausnehmung als durchgehende Bohrung dar, wobei das Gehäuse des Sensorelements einen Anschlag für die exakte Positionierung innerhalb der Bohrung aufweist.

Dieser Anschlag kann zum Beispiel ein vom Gehäuse des Sensorelements abstehender Bund sein.

Bevorzugt wird das Gehäuse des Sensorelements im Wesentlichen zylindrisch ausgebildet und an seiner Zylinderwandung mit einem Außengewinde versehen, wobei die Bohrung der Ausnehmung mit einem komplementären Innengewinde versehen wird.

Die Konstruktion des Sensorelements selbst wurde bislang noch nicht näher besprochen. Es empfiehlt sich insbesondere im Hinblick auf die angestrebte Unempfindlichkeit gegenüber Störfaktoren, das Sensorelement mit einem Ferritkern und einer in dem Ferritkern angeordneten Sensorspule aufzubauen, wobei der Ferritkern auf der Seite, die im eingebauten Zustand zu der signalgebenden Fläche zeigt, offen für den Durchtritt magnetischer Felder ausgebildet ist. Neben einer guten Abschirmung der Sensorspule wird außerdem der Messeffekt maximiert.

Der Ferritkern kann dabei als offen ausgebildeter Schalenkern, als E-Kern oder als U-Kern ausgebildet sein.

Zur Umsetzung der bei Belastung des Kraftaufnehmers auftretenden Verformung und der damit zusammenhängenden Induktivitätsänderung in ein zur weiteren Auswertung geeignetes Messsignal kann man entweder ein Brückenmessverfahren oder aber bevorzugt eine Oszillatorschaltung verwenden, welche bevorzugt benachbart zu dem Sensorelement angeordnet und in der Ausnehmung zusammen mit dem Sensorelement verkapselt angeordnet ist. Bevorzugt stellt das Sensorelement ein frequenzbestimmendes Teil der Oszillatorschaltung dar.

Von den anfallenden Sensoreffekten in Form von Änderungen der komplexen Permeabilität wird bevorzugt nur der Realteil ausgewertet, da dieser im Gegensatz zum Imaginärteil störungsunempfindlich ist. Dies ist von besonderer Bedeutung im Hinblick auf die im Fahrzeuginneren auftretenden elektromagnetischen Störsignale von bis zu 200 V/m.

Durch die Induktivitätsänderung bei wechselnder Belastung der Kraftmesszelle ergeben sich bei diesem Verfahren Änderungen der Frequenz des Oszillators. Damit kann ein frequenzanaloges Signal erzeugt werden, bei dem die weitere Signalübertragung mit sehr störsicheren Pegeln (z. B. TTL) erfolgen kann. Dieses Verfahren ermöglicht auch eine sehr einfache Signalweiterverarbeitung, da zur Darstellung eines Messwertes nur Zähler notwendig sind, die von gängigen Mikrocontrollern leicht ausgelesen werden können. Solche Zähler können sich schon als Teil des Schaltkreises in der Ausnehmung des Kraftaufnehmers befinden, vorzugsweise integriert in einen sogenannten ASIC-Baustein.

Um leicht reproduzierbare Qualitäten der signalgebenden Fläche zu erreichen, wird diese bevorzugt aus einer Ferrit-Polymer-Verbundfolie gebildet, die in dem Messabschnitt des Kraftaufnehmers gegenüberliegend zu dem Sensorelement angeordnet wird. Im Falle der Fertigung des Kraftaufnehmers aus einer Aluminiumlegierung erhält man dabei noch eine gewisse Signalverstärkung, während der Vorteil der Ferrit-Verbundfolie bei Kraftaufnehmern aus Stahl eher darin begründet liegt, dass man die bei diesem Werkstoff häufig beobachteten Unterschiede im magnetischen Verhalten ausgleicht.

Außerdem verbinden sich bei der Ferrit-Polymer-Verbundfolie die Eigenschaften von Ferriten (hohes Messsignal) mit der einfachen Handhabbarkeit (Verformbarkeit, Anpassungsfähigkeit) von Kunststofffolien.

Um den Kraftaufnehmer vor mechanischer Überlastung zu schützen, kann der nicht verformende Teil des Kraftaufnehmers als mechanischer Anschlag für eine Verformung des verformbaren Teils des Kraftaufnehmers ausgebildet werden. Bei einem Überschreiten der zulässigen Grenzbelastung des Kraftaufnehmers legt sich das elastisch verformbare Teil an dem nicht verformenden Teil an und stützt sich dort ab. Damit wird eine zu hohe Belastung und damit eine zu große Verformung des Krafteinleitungsteils vermieden. Diese Maßnahme läßt sich zweifach, nämlich in Hinblick auf zu erwartende Zug- und Druckkräfte vornehmen.

Bei einer besonders bevorzugten Ausführungsform wird schließlich nicht nur das Sensorelement und gegebenenfalls Teile des Schaltkreises, sondern die Sensoranordnung insgesamt in der Ausnehmung angeordnet. Wird die gesamte Sensoranordnung in einem gesonderten Gehäuse gekapselt, lässt sie sich in einfachster Weise, vergleichbar mit einer Zündkerze, austauschen.

Auf Grund der erfindungsgemäßen Ausgestaltung der Kraftmesszellen lassen sich diese zwischen Sitzrahmen und Tragrahmen eines Fahrzeugsitzes anordnen, wobei ein Gewichtsignal erhalten werden kann, das unabhängig davon ist, in welcher Position sich der Fahrzeugsitz, in Längsrichtung des Fahrzeugs gesehen, gerade befindet, und wobei auch weitere Verstellmöglichkeiten des Sitzes zugelassen werden können, z. B. die Höhenverstellung, die Einstellung der Neigung der Rückenlehne, die Verschwenkung der Sitzfläche um eine Achse quer zur Fahrzeuglängsrichtung etc., ohne dass das Messsignal hierdurch in unzulässigem Ausmaß verfälscht wird.

Bei der Verwendung der erfindungsgemäßen Kraftmesszellen zur Gewichtsbestimmung in einem Fahrzeugsitz kann dann entweder der Sitzrahmen mit dem nicht verformenden Teil des Kraftaufnehmers und der Tragrahmen mit dem elastisch verformbaren oder aber umgekehrt der Sitzrahmen mit dem elastisch verformbaren Teil des Kraftaufnehmers und der Tragrahmen mit dem nicht verformenden Teil des Kraftaufnehmers verbunden werden, so dass der Kraftaufnehmer vorzugsweise eine direkte Verbindung zu Sitz- und Tragrahmen schafft.

Um eine relativ große Genauigkeit für die Gewichtsmessung und die Schwerpunktsbestimmung zu realisieren, wird der Sitzrahmen mit dem Tragrahmen bevorzugt über vier Kraftmesszellen verbunden.

Die Verwendung von mindestens drei Kraftmesszellen im Zusammenhang mit der vorliegenden Erfindung hat zusätzlich den Vorteil, dass dann die Kraftaufnehmer so angeordnet werden können, dass sich der sogenannte H-Punkt der Sitzposition im Fahrzeug nicht oder allenfalls unwesentlich erhöht.

Bei der zuvor als bevorzugt vorgeschlagenen Montagemöglichkeit, nämlich den Sitzrahmen einerseits und den Tragrahmen andererseits jeweils direkt am nicht verformenden Teil des Kraftaufnehmers bzw. an dem elastisch verformenden Teil des Kraftaufnehmers zu montieren, bringt häufig sogar den Vorteil, dass man den H-Punkt etwas niedriger legen kann.

Der H-Punkt ist deshalb von Interesse, weil er Bestandteil einer Fahrzeugzulassung darstellt und ein indirektes Maß für die Kopffreiheit des Fahrzeuges ist. Eine Veränderung des H-Punktes über ein - je nach Fahrzeugtyp - festgelegtes Maß bedeutet zwangsläufig, dass eine Änderung vorgenommen wird, die eine Neuzulassung des gesamten Fahrzeuges notwendig macht.

Bevorzugt weist die erfindungsgemäße Vorrichtung einen oder mehrere Temperatursensoren auf, deren Messsignale von der Auswerteschaltung empfangen und zur Temperaturkorrektur der Wägesignale bei der Erstellung des Ausgangssignals verwendet werden.

Für eine sichere Funktionsüberwachung werden bevorzugt zwei voneinander unabhängig arbeitende Temperatursensoren in jeder Kraftmesszelle verwendet.

Gerade in Kraftfahrzeugen, die häufig im Freien abgestellt werden, ändert sich die Umgebungstemperatur der Kraftmesszellen in großen Bereichen und schnell, beispielsweise wenn im Winter bei Temperaturen unter dem Gefrierpunkt gestartet und durch die Fahrzeugheizung der Innenraum in wenigen Minuten auf 20 °C und mehr aufgeheizt wird, oder wenn im Sommer das Fahrzeug direkter Sonnenbestrahlung ausgesetzt ist und im Inneren Temperaturen weit über 60 °C erreicht werden und nach dem Starten des Fahrzeugs die Luft im Innenraum in kürzester Zeit durch Lüften und/oder Einschalten der Klimaanlage auf 20 °C gesenkt wird.

In bestimmten Anwendungsfällen kann eine größere Genauigkeit der Korrektur der Kraftnebenschlüsse dadurch erreicht werden, dass im Fußraum des Fahrzeugs (jedem einzelnen Fahrzeugsitz zugeordnet) ein Sensor angeordnet wird, welcher ein den Beinaufstellkräften an dieser Fläche entsprechendes Kraftnebenschlusswägesignal erzeugt, welches an die Auswerteschaltung geliefert und von dieser empfangen und verwertet wird.

Bevorzugt wird die Auswerteschaltung eine Funktion zur Bildung eines gleitenden Mittelwertes umfassen, mit deren Hilfe Gewichtsschwankungen, die durch Umgebungseinflüsse im Fahrzeug, wie das Beschleunigen oder Abbremsen des Fahrzeuges oder aber Belastungsspitzen, die durch Stöße, welche von Straßenunebenheiten herrühren, Vibrationen und dergleichen erzeugt werden, eliminiert werden und ein von Umgebungseinflüssen weitgehend befreites Wägeergebnis erzielt werden kann.

Die gleitende Mittelwertbildung hat den Vorteil, dass ständig ein Langzeitmittelwert zur Verfügung steht und damit jederzeit ein weitgehend von Umgebungseinflüssen freies Wägesignal als Ausgangssignal zur Verfügung gestellt werden kann.

Bei bevorzugten Ausführungsformen der erfindungsgemäßen Vorrichtung wird die Auswerteschaltung eine Funktionseinheit zur Berechnung von Beschleunigungswerten des Fahrzeugs umfassen, welche ausschließlich zeitliche Änderungen der Wägesignale der Kraftmesszellen auswertet. Dies ermöglicht die Einsparung von gesonderten Beschleunigungssensoren, der diesen sonst zuzuordnenden Auswerteelektronik und insbesondere auch die Einsparung der zugehörigen Verkabelung.

Ferner kann die Auswerteschaltung eine Unterscheidungsfunktion umfassen, welche aufgrund von zeitlichen Änderungen der Wägesignale der Kraftmesszellen zwischen Gewichtskräften unterscheidet, welche auf den Fahrzeugsitz durch lebende Personen einerseits und unbelebte Gegenstände andererseits ausgeübt werden, und ein entsprechendes Ausgangssignal liefert. Damit können auch schwere auf dem Fahrzeugsitz abgestellte Gegenstände erkannt und eine Auslösung der Airbags unterdrückt werden.

In einer Reihe von Fahrzeugen werden Fahrzeugdaten über ein Bussystem, über das alle im Fahrzeug befindlichen Steuergeräte Informationen austauschen, zur Verfügung gestellt. Bevorzugt weist deshalb die erfindungsgemäße Vorrichtung eine Schnittstelle zum Empfang solcher Fahrzeugdaten auf, so dass diese von der Auswerteschaltung bei der Verarbeitung der Messdaten mitverwendet werden können.

Aus Sicherheitsgründen empfiehlt es sich, in regelmäßigen Zeitabständen und/oder bei Auftreten bestimmter Ereignisse wie z. B. dem Aufschließen des Kraftfahrzeuges oder dem Ingangsetzen des Motors die Kraftmesszellen auf ihre Funktion hin zu überprüfen.

Dementsprechend wird die Auswerteschaltung bevorzugt eine Diagnosefunktion umfassen, mittels welcher die Funktionstüchtigkeit der Kraftmesszellen überprüfbar ist.

Die Auswerteschaltung wird bevorzugt einen Datenspeicher umfassen, in welchem Wägesignale, Ausgangssignale und/oder sonstige von der Auswerteschaltung empfangene Messsignale oder von dieser erzeugte Ausgangssignale für einen vorgegebenen Zeitraum speicherbar sind. Dieser Datenspeicher hat nicht nur eine sogenannte Fahrtenschreiberfunktion, sondern kann auch der Auswerteschaltung selbst zur Verfügung stehen, um Plausibilitätsprüfungen von aktuell erhaltenen Wägesignalen etc. durchführen zu können. Darüber hinaus kann an. Hand dieser Daten eine Bewertung des Betriebszustandes der Kraftaufnehmer durchgeführt werden, was einem weiteren Sicherheitsaspekt genügt.

Bei einer bevorzugten Form der Auswerteschaltung wird der Lastbereich eines jeden Aufnehmers in Lastbereichintervalle unterteilt und über einen Zeitraum aufsummiert, wie viele Belastungen in jedem der Intervalle bislang aufgetreten sind. Hieraus lässt sich dann eine Häufigkeitsverteilung der Belastungen berechnen, und Überlastungssituationen können auf dieselbe Weise registriert werden.

Bevorzugt werden die Ergebnisse solcher Prüfungen dann in einem weiteren Datenspeicherabschnitt abgespeichert.

Die Langzeitdrift des Nullsignals ist eine stetige Funktion, d. h. eine Funktion, bei der sich die einzelnen Werte nicht sprunghaft ändern. Auf Grund dieser Gegebenheit ist die Auswerteschaltung in der Lage, durch Analyse des zeitlichen Verlaufs der Nullsignale eine solche Drift von sprunghaften Änderungen, wie sie etwa durch auf den Sitz gelegte Gegenstände herrühren, zu unterscheiden und damit die Nullpunktsdrift sowie die damit verbundenen Messfehler zu korrigieren.

Geeignete Zeitpunkte zum Erfassen der Nullsignale mit nachfolgender Abspeicherung zur Beobachtung der Langzeitdrift sind etwa der Moment des Aufschließens oder des Abschließens des Fahrzeuges. Bleibt dabei auf dem Sitz ein Gegenstand liegen, so erweist sich dieser als sprunghafte Änderung gegenüber dem zuvor notierten Zustand und wird bei der Beobachtung der Langzeitdrift über den Diskriminator ausgeblendet.

Durch die Aufzeichnung der Daten über einen vorgegebenen Zeitraum hinweg, insbesondere der Daten, die von den einzelnen Kraftmesszellen geliefert werden, lassen sich diese als Häufigkeitsverteilung darstellen und abspeichern und erlauben dadurch eine Bewertung aller in der Vergangenheit aufgetretenen Belastungssituationen, so dass die Auswerteschaltung eine sogenannte Logbuchfunktion übernimmt. Zur Berechnung der Häufigkeitsverteilung wird der Lastbereich, wie zuvor schon beschrieben, in Intervalle aufgeteilt und zusätzlich ein Überlastungsbereich definiert, und die Auswerteschaltung summiert auf, wie oft Belastungswerte in den jeweiligen Intervallen bzw. wie häufig Überlastungssituationen aufgetreten sind. Diese Art der Auswertung benötigt nur wenig Speicherplatz und erlaubt die Analyse der Daten über sehr lange Zeiträume. Dies ist insbesondere für die Überprüfung der vollen Funktionsfähigkeit der Kraftaufnehmer und der Auswerteschaltung von großer Bedeutung.

Die Erfassung der Einzelmesswerte der Kraftaufnehmer und der Vergleich dieser Werte mit früher erhaltenen Daten erlaubt eine Plausibilitätsbetrachtung und ermöglicht so der Auswerteschaltung eine Funktionsfehlererkennung der gesamten Vorrichtung. Wird bei dieser Prüfung eine Funktionsstörung erkannt, so wird ein entsprechender Fehlercode an ein nachgeschaltetes Steuergerät, beispielsweise die Fahrzeugelektronik und deren Zentralcomputer, weitergeleitet.

Die Erfindung betrifft ferner einen Fahrzeugsitz, in dem die zuvor beschriebene erfindungsgemäße Vorrichtung eingebaut ist.

Die Erfindung betrifft weiterhin ein Verfahren zur Auswertung von Wägesignalen, die mit Hilfe der vorstehend beschriebenen Vorrichtung erhalten werden.

Dieses Verfahren zur Erfassung und Aufbereitung von auf einen Fahrzeugsitz wirkenden Gewichtskräften zum Bestimmen der Masse eines auf einer Sitzfläche des Fahrzeugsitzes sitzenden Insassen, umfasst die Schritte:

- Erfassung von Wägesignalen von mindestens drei an Last tragenden Teilen des Fahrzeugsitzes an Eckpunkten einer imaginären polygonalen. Fläche angeordneten Kraftmesszellen mittels einer elektronischen Auswerteschaltung;
- Bildung eines absoluten Wägegesamtsignals aus den Wägesignalen, welches der von der Masse des Insassen auf den Sitz ausgeübten Gewichtskraft entspricht;
- Bestimmung der Lage des Schwerpunkts der von der Masse des Insassen auf die Sitzfläche ausgeübten Gewichtskraft aus den Wägesignalen;
- Korrelation des absoluten Wägegesamtsignals mit der Lage des Schwerpunktes unter Ermittlung eines Korrekturparameters;
- Abrufen eines Massenkorrekturwertes zur Korrektur von Kraftnebenschlüssen in Abhängigkeit von dem Korrekturparameter aus einem Datenspeicher, welcher für absolute Wägegesamtsignale und dazu korrelierende Schwerpunktslagen Massenkorrekturwerte gespeichert enthält; und
- Berechnung der Masse des Insassen aus dem absoluten Wägegesamtsignal und dem Massenkorrekturwert.

Das erfindungsgemäße Verfahren umfasst einen Schritt, mit welchem, basierend auf Wägesignalen der Kraftmesszellen bei unbelastetem Fahrzeugsitz, eine Korrektur des Nullpunktes der Wägesignale vorgenommen wird.

· Die Nullpunktkorrektur ist bei der erfindungsgemäßen Vorrichtung und dem erfindungsgemäßen Verfahren von erheblicher Bedeutung, da das Messsystem, das die Kraftaufnehmer beinhaltet, in der Regel über Jahre zusammen mit dem Fahrzeugsitz in dem Fahrzeug verbleibt und sich über diesen Zeitraum erfahrungsgemäß deutliche Verlagerungen des Nullpunkts der einzelnen Sensorelemente bzw. Kraftmesszellen ergeben.

Die Korrektur der Nullpunktsdrift wird erfindungsgemäß so vorgenommen, dass für jede Kraftmesszelle ein zuletzt gültiges Wägesignal $W_L$ bei unbelastetem Fahrzeugsitz gespeichert und mit dem Wägesignal $W_N$ der nachfolgenden gültigen Messung bei unbelastetem Sitz verglichen wird, dass eine Differenz

$$D = W_N - W_L$$

gebildet und daraufhin geprüft wird, ob diese innerhalb eines vorgegebenen Bereichs von Nullpunktsdriftwerten liegt, dass im Falle, dass die Differenz D innerhalb des vorgegebenen Bereichs liegt, diese zu einem in einem Differenzwertspeicher gespeicherten Wert addiert wird, und dass im Falle, dass die Differenz D außerhalb des vorgegebenen Bereichs liegt, diese verworfen und der in dem Differenzwertspeicher gespeicherte Wert konstant gehalten wird.

Das Messsystem unterscheidet hier in einfacher Weise Geringbelastungen von einer Nullpunktsdrift, auch wenn die Geringbelastung, wie bei einem über den Sitz aufgezogenen Sitzbezug, lang anhaltend ist. Hier wird bei der ersten Prüfung der Nullpunktsänderung ein sprunghafter Anstieg des Nullpunktswägesignals festgestellt, diese Änderung verworfen und bei der nächsten Messung der Nullpunktswert mit aufgezogenem Sitzbezug als $W_L$ verwendet, so dass ab diesem Zeitpunkt die Nullpunktsdrift, wenn auch auf einem parallel verschobenen Niveau, weitergeprüft und verfolgt werden kann.

Auch der Fall einer auf dem Sitz liegen gebliebenen Zeitung oder Aktentasche kann so zu keiner Fehlkorrektur führen, auch dann nicht, wenn sie längere Zeit dort liegen bleibt und erst später wieder entfernt wird. Hier wird, so lange der Gegenstand auf dem Sitz verbleibt, bei sonst nicht weiter belastetem Sitz die Nullpunktskorrektur durchgeführt. Wird dann später der Gegenstand entfernt, dann beobachtet das System einen sprunghaften Abfall des Nullpunktssignals, wobei dann die Differenz D wieder verworfen, jedoch das Wägesignal selbst als $W_L$ weiter verwendet und wieder auf dem ursprünglichen Niveau weitergeprüft wird.

Die in dem Speicher abgelegten Daten für die Massenkorrektur werden bevorzugt empirisch für einen bestimmten Fahrzeugsitztyp ermittelt. Damit erhält man die genauesten Korrekturwerte.

In der Regel werden die Wägesignale der einzelnen Kraftmesszellen vor der Aufbereitung durch die elektronische Auswerteschaltung einer Mittelwertbildung unterworfen, um so höherfrequente Störsignale, die beispielsweise durch Vibrationen des Fahrzeugs oder durch Stöße, verursacht durch schlechte Straßenverhältnisse, zu Stande kommen, zu eliminieren. Das Aufsummieren über einen Zeitraum von beispielsweise 1 s ist in diesem Zusammenhang bereits ausreichend. Hierdurch werden aber bereits die am häufigsten anzutreffenden Störsignale ausgeblendet, ohne dass das System dadurch reaktionsträge wird.

Bevorzugt sind die Kraftmesszellen so angeordnet, dass sie vertikal einwirkende Kräfte in eine Verformung in einer Vertikalebene umsetzen, so dass in der Horizontalen wirksame Störkräfte, wie z. B. Beschleunigungs- oder Abbremskräfte, die niederfrequent sind, allenfalls untergeordnet und für die erfindungsgemäß angestrebten Ergebnisse oft vernachlässigbar sind. Dies vermeidet eine zwingende Berücksichtigung dieser Störkräfte vor allem bei der Entscheidung, ob ein Insasse eine Position einnimmt, in der der Airbag gefahrlos gezündet werden kann.

Da dies mit von der momentanen Sitzhaltung des Insassen abhängt, ist es in diesem Zusammenhang essentiell, auf kein träges System angewiesen zu sein, da dieser momentan seine Sitzhaltung verändern kann.

Das erfindungsgemäße Verfahren stellt damit nicht nur einen genauen Massewert des jeweiligen Insassen zur Verfügung, in dem neben dem gemessenen Massewert auch der durch Kraftnebenschlüsse nicht über den Sitz messbare, am Fahrzeugboden abgestützte Massenanteil über den Massenkorrekturwert berücksichtig wird, sondern bietet auch ein System, bei dem Störsignale ausgeblendet sind, ohne dass das System dadurch träge wird.

Die Erfassung der Wägesignale bei unbelastetem Fahrzeugsitz wird bevorzugt in vorgegebenen Zeitabständen und/oder beim Eintritt vorgegebener Ereignisse, bei denen in der Regel von einem unbelasteten Sitz ausgegangen werden kann, vorgenommen werden.

Dies ist zum Beispiel der Fall, wenn das Fahrzeug auf- oder abgeschlossen wird. Ein angemessener Zeitabstand zur Durchführung der Nullpunktskorrektur ist z. B. ein oder mehrere Tage. Bei diesen Zeitabständen bleiben die Nullpunktsdriften gering und sind eindeutig von Geringbelastungen zu unterscheiden.

Bei einem weiter bevorzugten Verfahren ist vorgesehen, dass dieses einen Diagnosemodus umfasst, in welchem die Funktionsfähigkeit der Kraftmesszellen in vorgegebenen Zeitabständen und/oder beim Eintritt vorgegebener Ereignisse, beispielsweise beim Auftanken des Fahrzeugs, geprüft wird.

Bevorzugt wird bei dem Diagnosemodus das Auftreten einer Differenz D bei einem Wägesignal außerhalb des vorgegebenen Bereichs erfasst und im Falle, dass dies nur für das Wägesignal einer der Kraftmesszellen gilt, ein Alarmsignal erzeugt wird. Ein solches Vorkommnis lässt sich eindeutig einer Fehlfunktion der das Wägesignal erzeugenden Kraftmesszelle zuordnen, da die Kraftmesszellen empfindlich und genau genug sind, um jede Geringbelastung, auch wenn sie außermittig auftritt, zu detektieren.

Bei einer bevorzugten Vorrichtung werden vier Kraftmesszellen verwendet, die an den Eckpunkten eines Vierecks angeordnet sind. Fällt eine der Kraftmesszellen aus, so kann die Auswerteschaltung ihre Funktion in einer Notbetriebsweise immer noch, wenn auch mit geringerer Genauigkeit, fortführen. Die Sicherheitsüberlegungen gebieten es dennoch, dass die Auswerteschaltung in einem solchen Fall ein Alarmsignal erzeugt, das auf den Umstand des Ausfalls einer Kraftmesszelle hinweist.

Um die Reparaturmaßnahme bzw. den Austausch möglichst wenig aufwendig zu gestalten, wird bevorzugt vorgesehen, dass die Auswerteschaltung mit ihrer Diagnosefunktion ein weiteres Signal neben dem Alarmsignal erzeugt, welches angibt, welche die als abweichend erkannte Kraftmesszelle ist.

Bei einem weiter bevorzugten Verfahren wird die Auswerteschaltung in einem Langzeitaufzeichnungsmodus Wägesignale, Ausgangssignale und/oder sonstige empfangene und/oder erzeugte Signale für einen vorgegebenen gleitenden Zeitraum in einem Datenspeicherbereich aufzeichnen. Dieser Speicher arbeitet nach dem FIFO-Prinzip, so dass, je nach Umfang des vorgesehenen Speicherbereichs, eine Art Logbuch geführt werden kann, welches die Ereignisse des zuletzt vergangenen Zeitraums beinhaltet.

Für die Diagnose und die Funktionsüberwachung der Kraftmesszellen ist es von Bedeutung, die Zahl der Lastwechsel und insbesondere die Zahl der Überlastereignisse zu kennen, da man hiervon abgeleitet einen wahrscheinlichen Ausfall der Kraftmesszelle vorhersagen und deren Austausch rechtzeitig anmahnen kann.

Hierzu wird das erfindungsgemäße Verfahren vorzugsweise mit einer Statistikfunktion versehen, mittels welcher die Wägesignale der einzelnen Kraftmesszellen in reguläre Messereignisse und Fälle einer Überlast repräsentierende irreguläre Messereignisse klassifiziert und gezählt werden, wobei beim Erreichen einer vorgegebenen Zahl von Überlastereignissen ein Anzeigesignal erzeugt wird.

Um eine weitergehende Funktionsüberwachung zu realisieren, wird die Statistikfunktion um die Klassifizierung der regulären Messereignisse in mehrere Klassen erweitert, wobei für jede der Gewichtsklassen die ihr zugeordneten Messereignisse gezählt werden.

Bevorzugt werden in dem Langzeitaufzeichnungsmodus zur Aufzeichnung der jeweiligen Signale hierzu korrelierende Zeitsignale in einem Datenspeicher aufgezeichnet, so dass eine detaillierte Analyse der Daten auch in ihrer zeitlichen Korrelation erfolgen kann.

Bei bevorzugten erfindungsgemäßen Verfahren werden von einem Bussystem im Fahrzeug übermittelte Fahrzeugdaten über eine Schnittstelle empfangen. Typischerweise umfassen diese Fahrzeugdaten die momentane Fahrzeuggeschwindigkeit, das Betätigen des Zündschlosses, des Auf- und Abschließens des Fahrzeugs sowie Zeit und Kalender-Datum-Informationen.

Bevorzugt werden von den Fahrzeugdaten die Fahrzeuggeschwindigkeitsdaten ausgewertet und hieraus Beschleunigungswerte ermittelt, welche gegebenenfalls mit den aus den zeitlichen Änderungen der Wägesignale der Kraftmesszellen berechneten Beschleunigungswerten verglichen werden.

Aus dem Vergleich können Rückschlüsse über die Straßensteigung gezogen werden und deren Einfluss auf die Messsignale der Kraftmesszellen.

Über Langzeitbetrachtungen können Rückschlüsse auf die Funktionsfähigkeit der Kraftmesszellen gezogen werden.

Durch die Übermittlung der Information betreffend das Auf- und/oder Abschließen des Fahrzeugs kann ein Startsignal zur Durchführung der Nullpunktskorrektur abgeleitet werden.

Bei bevorzugten erfindungsgemäßen Verfahren wird aus den Fahrzeugdaten das Kalender-Datum ausgewertet und verwendet, so dass beispielsweise beim Durchführen einer Nullpunktskorrektur die erfolgte Korrektur als Ereignis mit zugehörigem Kalender-Datum abgespeichert wird und das jeweils aktuell empfangene Kalender-Datum mit dem Kalender-Datum der zuletzt vorgenommenen Nullpunktskorrektur verglichen. Hieraus ist leicht erkennbar, wenn ein Fahrzeug für längere Zeit stillgelegt oder nicht benutzt wurde. Die zum späteren Zeitpunkt erkannte Nullpunktsverschiebung kann dann daraufhin geprüft werden, ob es sich um eine Nullpunktsdrift handelt, die zu korrigieren ist, oder ob die Nullpunktsverschiebung einer festen Vorlaständerung des Fahrzeugsitzes zuzuordnen ist.

Diese und weitere Vorteile der Erfindung werden im weiteren an Hand der Zeichnungen im Einzelnen noch näher erläutert.

Es zeigen im Einzelnen:

Figur 1:     eine erfindungsgemäße Gewichts-Erfassungs- und Auswertevorrichtung;

Figur 2A/B:  einen Fahrzeugsitz in Front- und Seitenansicht mit einer erfindungsgemäßen Vorrichtung;

Figur 3:     eine schematische Detailansicht des Fahrzeugsitzes der Figur 2B;

Figur 4:     eine teilweise aufgebrochene Seitenansicht einer Kraftmesszelle einer erfindungsgemäßen Vorrichtung;

Figur 5:     eine Schnittansicht durch ein Sensorelement einer Kraftmesszelle einer erfindungsgemäßen Vorrichtung; und

Figur 6:     eine schematische Darstellung des erfindungsgemäßen Gewichts-Erfassungs- und Auswerteverfahrens.

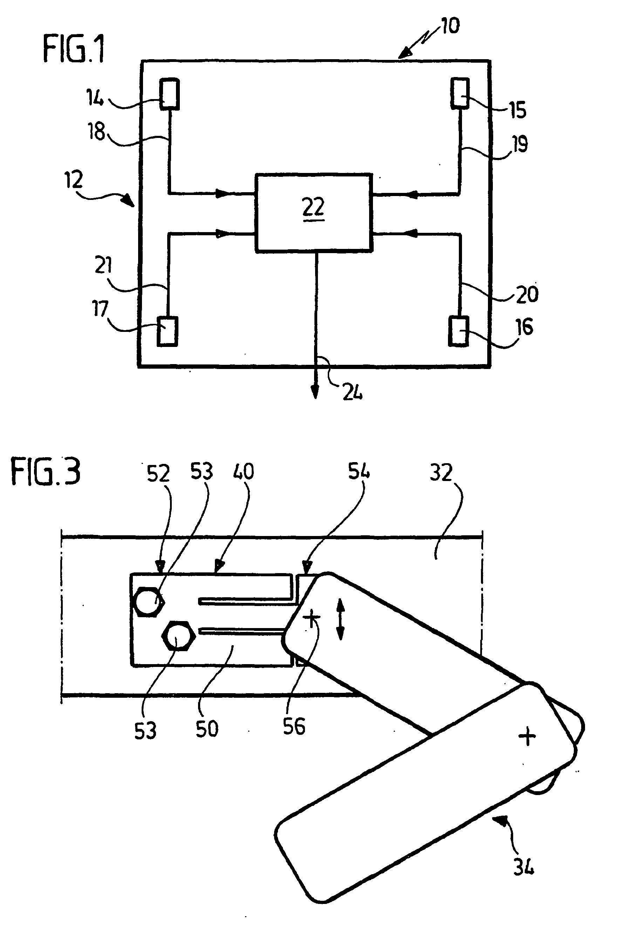

Figur 1 zeigt schematisch eine erfindungsgemäße Vorrichtung 10 zum Erfassen und Auswerten einer Gewichtskraft, welche auf einen (hier nur angedeuteten) Fahrzeugsitz 12 wirkt.

Die erfindungsgemäße Vorrichtung 10 umfasst im vorliegenden Beispiel vier Kraftmesszellen 14, 15, 16 und 17, welche im Bereich der vier Ecken der Sitzfläche des Fahrzeugsitzes 12 angeordnet sind.

Die Kraftmesszellen 14 bis 17 sind über Signalleitungen 18, 19, 20 und 21 mit einer Auswerteschaltung 22 verbunden, welche die von den Kraftmesszellen gelieferten Wägesignale empfängt und aufbereitet. Nach erfolgter Aufbereitung, die im Folgenden noch weiter beschrieben werden wird, stellt die Auswerteschaltung über eine Signalausgangsleitung 24 ein Ausgangssignal für eine nachgeordnete Steuerschaltung bzw. die Fahrzeugelektronik bereit, welche die Weiterleitung des Signals an die Airbag-Steuerelektronik, gegebenenfalls in zusätzlich aufbereiteter Form, übernimmt.

Die Signalausgangsleitung 24 kann Teil eines fahrzeugeigenen Signalbussystems sein, über welches Fahrzeugdaten zwischen verschiedenen Steuereinheiten des Fahrzeugs ausgetauscht werden.

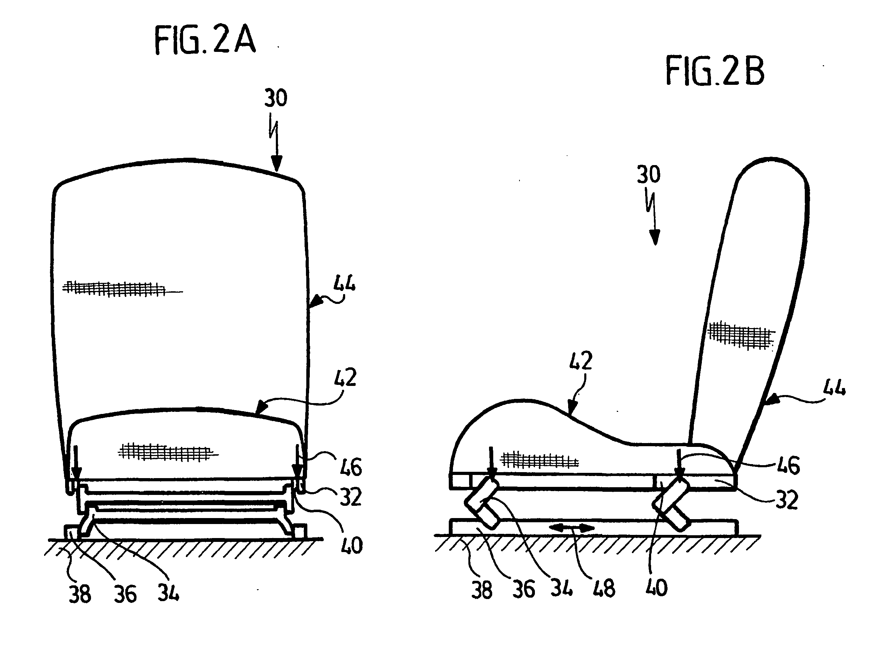

Die Figuren 2A und 2B zeigen in größerem Detail einen Fahrzeugsitz 30 in einer Front- bzw. Seitenansicht mit einem Sitzrahmen 32 und einem Tragrahmen 34. Der Tragrahmen 34 ist an Schienen 36 an einem Fahrzeugboden 38 in Längsrichtung des Fahrzeuges verschieblich befestigt. Der Tragrahmen 34 ist im vorliegenden Ausführungsbeispiel höhenverstellbar und hält den Sitzrahmen 32 an vier Punkten. Die Verbindung zwischen Tragrahmen 34 und Sitzrahmen 32 geschieht über Kraftmesszellen mit einem Kraftaufnehmer, wobei der Kraftaufnehmer ein nicht verformendes Teil und ein elastisch verformbares Teil aufweist. Eines der beiden Teile ist am Sitzrahmen 32 montiert, das jeweils andere an dem Tragrahmen 34. Am Sitzrahmen 32 ist eine Sitzfläche 42 sowie eine Rückenlehne 44 gehalten. Wirkt nun eine Gewichtskraft im Sinne der Pfeile 46 auf den Fahrzeugsitz 30, so bleibt das von den Kraftmesszellen 40 erzeugte Wägesignal unabhängig von der Höheneinstellung der Sitzfläche 42.

Durch die Anordnung der Kraftmesszellen 40 zwischen Tragrahmen und Sitzrahmen wird vermieden, dass sich der sogenannte H-Punkt nach oben verlagert. Es kann bei einer Vielzahl von Sitzkonstruktionen sogar eine gewisse Höhe für den H-Punkt gewonnen, d. h. dieser niedriger gelegt werden als bei der ursprünglichen Sitzkonstruktion. Damit vermeidet man die Notwendigkeit einer Neuzulassung eines Fahrzeuges oder auch nur der Änderung einer Zulassung eines Fahrzeuges.

Auch eine Verschiebung des Fahrzeugsitzes 30 im Sinne des Doppelpfeils 48 (Figur 2B) nimmt keinen Einfluss auf die von den Kraftmesszellen 40 ermittelten Wägesignale.

Wird die Sitzfläche 42 nach vorn gekippt, d. h.

die Höhenverstellung des Tragrahmens 34 vorn geringer vorgenommen als im hinteren Bereich oder umgekehrt, so verlagert sich dadurch automatisch der Schwerpunkt der auf dem Sitz 30 sitzenden Person. Auf Grund der Anordnung von vier Kraftmesszellen am Sitz 30 kann diese Gewichtsverlagerung als Schwerpunktverlagerung festgestellt werden, und auf Grund dessen können gegebenenfalls veränderte Kraftnebenschlüsse bei der Auswertung berücksichtigt werden.

Über die Ausbildung der Kraftmesszellen, die erfindungsgemäß zwischen Sitzrahmen und Tragrahmen des Fahrzeugsitzes angeordnet werden, wurde bislang noch nichts Näheres ausgeführt.

Auf Grund der Störeinflüsse, die in Kraftfahrzeugen häufig anzutreffen sind, eignen sich insbesondere sogenannte induktive Kraftaufnehmer als Bestandteil der Kraftmesszellen. Ein Beispiel für einen solchen Kraftaufnehmer ist in Figur 3 schematisch dargestellt, die gleichzeitig auch der weiteren Verdeutlichung der bevorzugten Montage der Kraftmesszelle zwischen Sitzrahmen und Tragrahmen dient. Die in Figur 3 gezeigte Anordnung entspricht im Prinzip der Anordnung der Figur 2A/B.

Die Kraftmesszelle 40 umfasst hierbei einen Kraftaufnehmer 50, der induktiv arbeitet. Der Kraftaufnehmer 50 beinhaltet ein nicht verformendes Teil 52 und ein elastisch verformbares Teil 54. Im vorliegenden Ausführungsbeispiel ist das nicht verformende Teil 52 mittels Schraubenbolzen an dem Sitzrahmen 32 befestigt, während das elastisch verformbare Teil 54 im Bereich des Drehpunktes eines Verstellmechanismus' des Tragrahmens 34 verbunden ist. Wie aus Figur 3 leicht anschaulich gemacht werden kann, kann das Montageprinzip zwischen Sitzrahmen-Kraftaufnehmer 50 und Tragrahmen 34 auch umgekehrt realisiert werden, wobei dann das nicht verformende Teil 52 des Kraftaufnehmers 50 an dem Drehpunkt 56 des Tragrahmens bzw. dessen Höherverstellmechanismus' befestigt ist und der elastisch verformende Teil 54 direkt mit dem Sitzrahmen 32 verbunden ist.

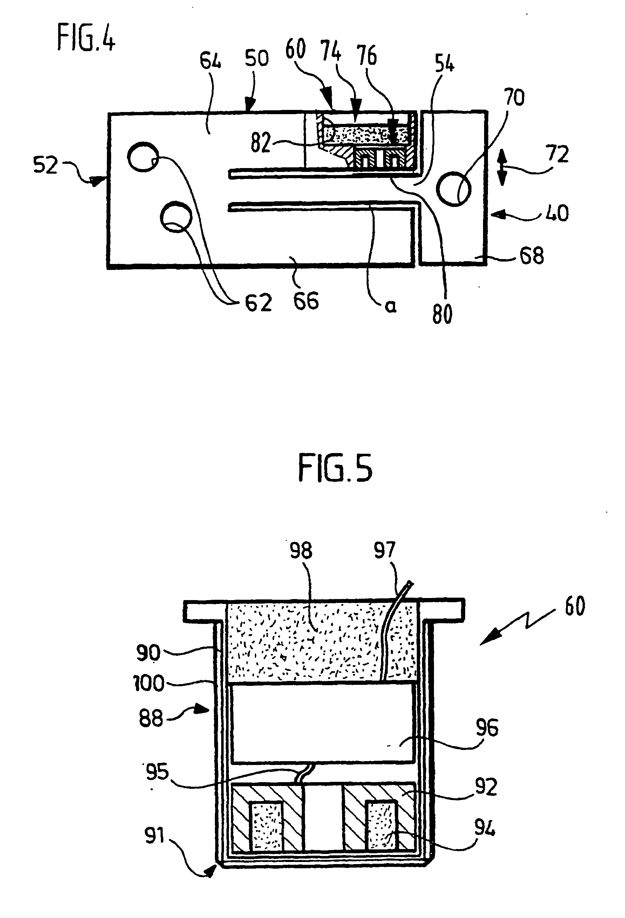

Figur 4 zeigt die insgesamt mit dem Bezugszeichen 40 versehene Kraftmesszelle der Figur 3 mit einem Kraftaufnehmer 50 und einem induktiv arbeitenden Sensoranordnung 60.

Der Kraftaufnehmer 50 umfasst einen ortsfest montierbaren Abschnitt 52, welcher zwei Bohrungen 62 aufweist, mit denen über (hier nicht dargestellte) Schraubenbolzen 53 die ortsfeste Montage des Kraftaufnehmers 50 erfolgen kann.

Von dem ortsfest montierbaren Abschnitt 52 des Kraftaufnehmers 50 erstrecken sich zwei im Wesentlichen parallele Vorsprünge 64, 66 mit definiertem Abstand a voneinander. Diese Vorsprünge 64, 66 sind als nicht verformende Teile des Kraftaufnehmers 50 ausgebildet.

Zwischen den beiden parallelen Vorsprüngen 64, 66 erstreckt sich von dem ortsfesten Abschnitt 52 ein elastisch verformbares Teil 54 (auch Biegestab genannt), welches an seinem freien Ende einen Montageabschnitt 68 mit einer Bohrung 70 aufweist. Insgesamt werden das elastisch verformbare Teil 54 und der Montageabschnitt 68 im Folgenden als Krafteinleitungsteil bezeichnet.

Im lastfreien Zustand verlaufen die nicht verformenden Vorsprünge 64, 66 und das elastisch verformbare Teil 54 mit konstantem Abstand a zueinander.

Wirkt am Krafteinleitungsteil eine Kraft ein, so bewegt sich der Montageabschnitt 68 je nach Richtung der Krafteinleitung im Sinne des Doppelpfeils 72 nach unten oder nach oben. Dadurch verändert sich der zwischen dem elastisch verformbaren Teil 54 und dem nicht verformenden Teil 64 bzw. 66 bestehende Spalt, d. h. der Abstand a des elastisch verformbaren Teils 54 zu den nicht verformenden Teilen 64, 66 wird vergrößert bzw. verkleinert.

Diese Abstandsänderung detektiert die in einem Messabschnitt angeordnete Sensoranordnung 60 und liefert ein der einwirkenden Kraft entsprechendes Wägesignal.

Die Sensoranordnung 60 weist hierzu einen induktiv arbeitendes Sensorelement mit einem Ferrit-Schalenkern 76 und einer in dem Schalenkern angeordneten Spule auf. Auf Grund der Verformung des elastisch verformbaren Teils 54 bei Krafteinwirkung am Montageabschnitt 68 vergrößert sich oder vermindert sich der Abstand des Sensors 74 zu der gegenüberliegenden Oberfläche (= Signal gebende Fläche) des elastisch verformbaren Teils 54, wodurch in der Spule ein elektrisches Signal induziert wird.

Verstärken lässt sich dieses Signal, indem man auf der Signal gebenden Fläche des elastisch verformbaren Teils 54 eine Ferrit-Verbundfolie 80 anordnet.

Die Sensoranordnung 60 selbst ist in einer Ausnehmung 82 des nicht verformenden Teils (Vorsprung 64) des Kraftaufnehmers 50 angeordnet und so bereits vor mechanischen Beschädigungen geschützt. Gleichzeitig wirkt die metallische Umgebung als Schutz gegen elektromagnetische Störfelder.

Vorzugsweise wird, wie in Figur 4 dargestellt, ein weiterer Teil der Sensoranordnung, nämlich ein Oszillator, in der Ausnehmung 82 angeordnet. Gegebenenfalls kann auch die gesamte Sensorelektronik der Sensoranordnung in der Ausnehmung 82 angeordnet werden, so dass die Kraftmesszelle 40 lediglich noch mit einer elektrischen Leitung (nicht dargestellt) versehen werden muss, um diese mit einer Auswerteschaltung (nicht dargestellt) für das Wägesignal zu verbinden.

Nachdem der Sensor 74 und die Sensorelektronik (insbesondere Oszillator) in der Ausnehmung 82 angeordnet sind, kann der oberhalb noch verbleibende Raum mit einer aushärtbaren Masse vergossen werden, so dass der Sensor 74 und die Sensorelektronik nicht nur vor mechanischen, sondern auch vor Temperatur- und Feuchtigkeitseinflüssen geschützt und gekapselt ist.

Figur 5 zeigt ein Sensorelement 88, welches in einem separaten Gehäuse 90 gekapselt ist in Schnittansicht. Hieraus erkennt man die Anordnung eines ringförmigen Schalenkerns 92, der in einer einseitig offenen Ausnehmung eine Spule 94 aufnimmt. Die offene Seite des Schalenkerns 92 weist zu dem offenen freien Ende des Gehäuses 90 hin. Das Gehäuse 90 ist an seinem Ende 91 gegenüber Umwelteinflüssen hermetisch abgedichtet, aber für magnetische Felder durchlässig.

Die Spule 94 ist über eine elektrische Leitung 95 mit einer einen Oszillator beinhaltenden Sensorelektronik 96 verbunden, welche ausgangssseitig über ein Kabel 97 das eigentliche Wägesignal des Sensors bzw. des Kraftaufnehmers insgesamt zur Verfügung stellt. An seinem zweiten Ende ist das Gehäuse 90 mit einer Vergussmasse 98 verschlossen und so gegen Umwelteinflüsse gekapselt. An seiner Außenseite weist das Gehäuse 90 ein Schraubgewinde 100 auf und kann damit in eine Bohrung eines Kraftaufnehmers eingeschraubt werden.

Aus der vorstehenden Beschreibung wird deutlich, dass der erfindungsgemäße Fahrzeugsitz nicht nur für Kraftfahrzeuge bzw. Automobile geeignet ist, sondern sich beispielsweise auch als Sitz in Flugzeugen eignet, wobei dort dann die Möglichkeit gegeben ist, eine sehr genaue Abschätzung der Gesamtmasse der transportierten Passagiere vorzunehmen. Dies hat Vorteile bei der Abschätzung der mitzunehmenden Treibstoffvorräte oder, anders ausgewertet, bei der Berechnung einer zusätzlich möglichen Frachtzuladung.

Das Signalkabel 97 wird über die Steckverbindung (nicht gezeigt) mit einer Auswerteelektronik (vgl. Figur 1) verbunden, welche das Wägesignal des Sensors 88 bzw. des Kraftaufnehmers gegebenenfalls mit weiteren Wägesignalen von weiteren am Fahrzeugsitz montierten Kraftmesszellen aufbereitet und der Fahrzeugelektronik ein Signal zur Verfügung stellt, welches beispielsweise ein verschiedene Gewichtsklassen unterscheidendes Signal ist und so direkt zur Ansteuerung von mehrfach zündbaren Airbags verwendet werden kann.

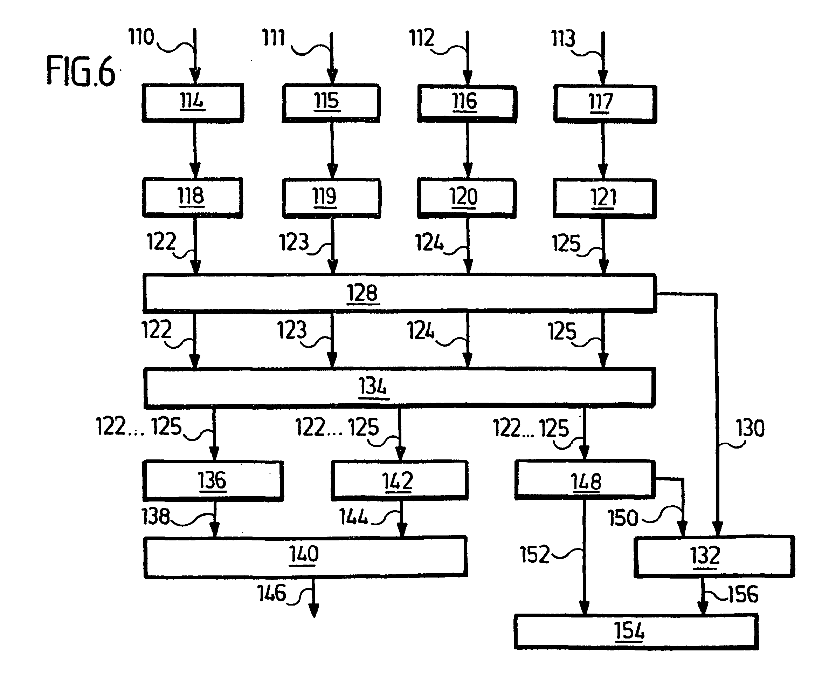

Figur 6 beinhaltet eine schematische Darstellung des erfindungsgemäßen Gewichtserfassungs- und Auswerteverfahrens, welches gleichzeitig eine interne Struktur einer bevorzugten Vorrichtung zur Durchführung dieses Verfahrens veranschaulicht. Diese Darstellung geht davon aus, dass die Vorrichtung über vier Sensoren verfügt, welche Wägesignale 110, 111, 112 und 113 an die elektronische Auswerteschaltung senden. In einer Eingangsstufe der Vorrichtung werden diese Rohsignale zunächst in einem ersten Schritt in Filtereinheiten 114, 115, 116 und 117 gefiltert, um hochfrequente Störsignale, wie sie z. B. durch das Befahren unebener Straßen (insbesondere Schlaglöcher) sowie Vibrationen des Fahrzeugs hervorgerufen werden, zu eliminieren.

In einem Folgeschritt werden von den jeweiligen Kraftmesszellen zugeordnete Temperatursensoren die vor Ort vorherrschenden Temperaturen abgefragt und in einem weiteren Schritt in den Korrekturfunktionen 118 bis 121 auf den Temperaturfehler korrigiert.

Die so korrigierten Wägesignale 122 bis 125 werden dann an eine Diagnoseeinheit 128 übergeben, in der in einem ersten Schritt Plausibiliätsprüfungen durchgeführt werden, anhand derer die korrekte Funktion der einzelnen Kraftmesszellen überprüft wird. Wird bei dieser Prüfung z. B. bei einer Kraftmesszelle ein Wägesignal gefunden, welches beispielsweise einer Masse von 1 kg entspricht, während die anderen Kraftmesszellen ein Wägesignal mit dem Wert entsprechend der Masse 0 kg anzeigen, deutet dies auf den Ausfall dieser einen Kraftmesszelle hin. In diesem Schritt wird dann von der Diagnoseeinheit 128 ein Fehlersignal 130 erzeugt, welches an eine Einheit 132 zur Behandlung von Störungsmeldungen weitergegeben wird. Im Falle, dass die Plausibilitätsprüfung durch die Diagnoseeinheit 128 korrekt durchgeführt wird, werden die temperaturkorrigierten Wägesignale 122 bis 125 an eine Korrektureinheit 134 zur Nulldriftskorrektur weitergegeben. In dieser Funktion wird zunächst geprüft, ob es sich bei den Wägesignalen um Wägesignale eines unbelasteten Fahrzeugsitzes handelt, und falls dies der Fall ist, wird dann ein Vergleich mit dem zuletzt gespeicherten Nullwertsignal $W_L$ vorgenommen und, im Falle dass eine Differenz D vorgefunden wird, diese an einen Nullpunktsdriftspeicher zur Aufsummierung weitergegeben. Das aktuelle Nullwertsignal $W_N$ wird dann als neues Wägesignal $W_L$ abgespeichert, so dass sich nur durch die Verwendung von zwei Speicherstellen pro Kraftmesszelle, nämlich die Speicherstelle für den zuletzt gemessenen Nullwert $W_L$ des Wägesignals sowie den Nullpunktsdriftadditionsspeicher eine kontinuierliche Verfolgung der Nulldrift der Wägesignale durchführen lässt.

Die Wägesignale werden nach der Nulldriftkorrektur in der Korrektureinheit 134 einzeln an verschiedene Funktionen weitergeleitet, die im Folgenden kurz beschrieben werden sollen.

Eine der Funktionen, denen die Signale 122 bis 125 zugeführt werden, ist die Funktion zur Mittelwertbildung 136, wobei es sich hier um eine Funktion zur Bildung eines gleitenden Mittelwertes handelt. Dies bedeutet, neu eingespeiste Wägesignale ersetzen die ältesten bei der Mittelwertsbildung bislang berücksichtigten Wägesignale, so dass gleitend der Mittelwert stetig aktualisiert wird. Das von der Mittelwertfunktion abgegebene Signal 138 fasst die Werte der Wägesignale 122 bis 124 zusammen und gibt ein Wägegesamtsignal an eine Einheit zur Korrektur von Kraftnebenschlüssen weiter.

Ebenso werden die Wägesignale 122 bis 125 an eine Funktion 142 weitergegeben zur Berechnung der Lage des Schwerpunktes des Insassen auf der Sitzfläche. Die ermittelte Lage des Schwerpunktes wird als Signal 144 an die Einheit zur Korrektur des Kraftnebenschlusses 140 weitergegeben. Die Einheit zur Berechnung des Kraftnebenschlusses bildet dann aus dem Wägegesamtsignal 138 und der hier vorgenommenen Kraftnebenschlusskorrektur einen Endwert 146, der im Wesentlichen der Körpermasse des Insassen entspricht. Dieser Endwert wird letztendlich zur Beurteilung der körperlichen Robustheit des Insassen bzw. auch dessen Größe herangezogen, um so Einfluss auf die Airbag-Steuerung zu nehmen.

Die Bestimmung der Lage des Schwerpunktes wird darüber hinaus (hier nicht dargestellt) verwendet (Signal 144), um Gefahrensituationen für den Insassen beim Zünden des Airbags zu erkennen und in solchen Gefahrensituationen die Airbag-Steuerung außer Funktion zu setzen. Dies ist beispielsweise dann der Fall, wenn der Schwerpunkt extrem nach vorne verlagert ist, so dass anzunehmen ist, dass sich der Insasse sehr nahe an dem Montageort des Airbags befindet, eine Situation, in der das Zünden des Airbags tödliche Folgen haben kann.

Schließlich werden die gebündelten Wägesignale 122 bis 125 an eine Statistikeinheit 148 gegeben, in der die Wägesignale nach verschiedenen Gewichtsklassen sowie einer Überlast klassifiziert werden und in welcher eine Zählung der Messereignisse durchgeführt wird, um eine Häufigkeitsverteilung zu erhalten. Diese Häufigkeitsverteilung gestattet eine Beurteilung der Zuverlässigkeit der Kraftmesszellen bzw. von deren Kraftaufnehmern, die auf der Kenntnis der sogenannten Wöhler-Kurven für das Material der Kraftaufnehmer beruht.

Die Statistikeinheit 148 übernimmt quasi eine zweite Diagnosefunktion und überwacht letztendlich die Zahl der Lastwechsel bei dem Kraftaufnehmer der Kraftmesszelle in Abhängigkeit der bei den Lastwechseln auftretenden Kräfte, um so rechtzeitig ein Signal 150 erzeugen zu können, welches anzeigt, dass der jeweils betroffene Kraftaufnehmer einer Kraftmesszelle das Ende seiner Gebrauchsdauer auf Grund der aufgelaufenen Messergebnisse, beispielsweise von irregulären Messergebnissen, die einer Überlastsituation entsprechen, erreicht hat.

Die regulären Ergebnisse dieser Statistikfunktion können dann über die Signalleitung 152 an eine sogenannte Logbuch-Funktion 154 weitergegeben werden, in der diese Ereignisse gespeichert und zum Auslesen für die Fahrzeugelektronik, beispielsweise bei Wartungsarbeiten am Fahrzeug, bereitgehalten werden.

In gleicher Weise wird die Einheit 132, die für die Behandlung der Stör- bzw. Fehlersignale 130 und 150 zuständig ist, Ausgangssignale erzeugen, die (nicht dargestellt) direkt an die Fahrzeugelektronik gehen und dort den Bediener des Fahrzeuges darauf aufmerksam machen, dass eine Fehlfunktion und/oder das Gebrauchsende einer Kraftmesszelle eingetreten ist.

Die Meldung, die an die Kraftfahrzeugelektronik abgegeben wird, wird parallel dazu als Signal 156 ausgegeben und in dem Logbuch 154 aufgezeichnet. Besonders bevorzugt ist es, den Eintrag von den jeweiligen Daten im Logbuch mit einem Zeitsignal (z.B. Uhrzeit und/oder Kalender-Datum, wie von fahrzeugeigenen Bussystem zur Verfügung gestellt) zu verknüpfen, so dass klar der zeitliche Ablauf des Eintritts verschiedener Situationen anhand des Logbuchs 154 nachvollzogen werden kann.

**Patentansprüche**

1. Vorrichtung zur Erfassung und Auswertung einer von einer auf einem Fahrzeugsitz sitzenden Person ausgeübten Gewichtskraft, umfassend am Fahrzeugsitz angeordnete Sensoren, welche jeweils ein der Gewichtskraft entsprechendes Wägesignal erzeugen, und eine elektronische Auswerteschaltung, welche die Wägesignale empfängt und aufbereitet und ein auf den Wägesignalen basierendes Ausgangssignal erzeugt, wobei

   - die Sensoren Kraftmesszellen sind,
   - dass mindestens drei Kraftmesszellen vorhanden sind, welche an Last tragenden Teilen des Fahrzeugsitzes an Eckpunkten einer imaginären polygonalen Fläche angeordnet sind; und
   - dass die elektronische Auswerteschaltung eine Auswertefunktion umfasst, mit welcher aus den einzelnen Wägesignalen der mindestens drei Kraftmesszellen eine Lokalisierung des Schwerpunktes der auf den Fahrzeugsitz wirkenden Gewichtskraft durchführbar ist, wobei
   - die Auswerteschaltung eine Korrekturfunktion umfasst, mit welcher Kraftnebenschlüsse bei der Bildung des Ausgangssignals berücksichtigbar sind,

   **dadurch gekennzeichnet, dass** die Auswerteschaltung eine Funktion zur automatischen Nullpunktsdriftkorrektur des Wägesignals umfasst, und dass die Funktion zur automatischen Driftkorrektur einen Diskriminator zur Unterscheidung der Wägesignaldrift von zeitlich begrenzten Geringbelastungen umfasst wobei für jede Kraftmesszelle ein zuletzt gültiges Wägesignal $W_L$ bei unbelastetem Fahrzeugsitz gespeichert und mit dem Wägesignal $W_N$ der nachfolgenden gültigen Messung bei unbelastetem Sitz verglichen wird; eine Differenz $D = W_N - W_L$ gebildet und darauf hin geprüft wird, ob diese innerhalb eines vorgegebenen Bereichs von Nullpunktsdriftwerten liegt, im Falle, dass die Differenz D innerhalb des vorgegebenen Bereichs liegt, diese zu einem in einem Differenzwertspeicher gespeicherten Wert addiert wird und im Falle, dass die Differenz D außerhalb des vorgegebenen Bereichs liegt, diese verworfen wird und der in dem Differenzwertspeicher gespeicherte Wert konstant gehalten wird.

2. Vorrichtung nach Anspruch 1, **dadurch gekennzeichnet, dass** die Kraftmesszellen so angeordnet sind, dass die Krafteinleitung vertikal erfolgt.

3. Vorrichtung nach Anspruch 1 oder 2, **dadurch gekennzeichnet, dass** die Kraftmesszellen einen induktiv arbeitenden Kraftaufnehmer umfassen.

4. Vorrichtung nach Anspruch 3, **dadurch gekennzeichnet, dass** der induktiv arbeitende Kraftaufnehmer ein nach dem Wirbelstromprinzip arbeitender Kraftaufnehmer ist.

5. Vorrichtung nach Anspruch 4, **dadurch gekennzeichnet, dass** der nach dem Wirbelstromprinzip arbeitende Kraftaufnehmer so betrieben wird, dass frequenzanaloge Wägesignale erzeugbar sind.

6. Vorrichtung nach einem der Ansprüche 1 bis 5, **dadurch gekennzeichnet, dass** die Vorrichtung einen oder mehrere Temperatursensoren umfasst, deren Messsignale von der Auswerteschaltung empfangen und zur Temperaturkorrektur der Wägesignale bei der Erzeugung des Ausgangssignals verwendet werden.

7. Vorrichtung nach Anspruch 6, **dadurch gekennzeichnet, dass** die Vorrichtung einen im Fußraum des Fahrzeugs anzuordnenden Sensor umfasst, welcher ein Beinaufstellkräften entsprechendes Kraftnebenschlusswägesignal erzeugt, welches von der Auswerteschaltung empfangen wird.

8. Vorrichtung nach einem der voranstehenden Ansprüche, **dadurch gekennzeichnet, dass** die Auswerteschaltung eine Funktion zur Bildung eines gleitenden Mittelwertes umfasst.

9. Vorrichtung nach Anspruch 8, **dadurch gekennzeichnet, dass** die Funktion der Auswerteschaltung zur Bildung eines gleitenden Mittelwertes eine Filterfunktion umfasst, um Spitzenwerte der Wägesignale, hervorgerufen durch Beschleunigung, Abbremsen, und/oder Vibrationen des Fahrzeugs und/oder von Bewegungen der Person auf dem Fahrzeugsitz zu erkennen und entsprechend vorgegebener Kriterien zu verwerfen oder zu verwerten.

10. Vorrichtung nach einem der Ansprüche 1 bis 9, **dadurch gekennzeichnet, dass** die Auswerteschaltung eine Funktionseinheit zur Berechnung von Beschleunigungswerten des Fahrzeugs umfasst, welche ausschließlich zeitliche Änderungen der Wägesignale der Kraftmesszellen auswertet.

11. Vorrichtung nach Ansprüche 1 bis 10, **dadurch gekennzeichnet, dass** die Auswerteschaltung eine Unterscheidungsfunktion umfasst, welche aufgrund der zeitlichen Änderungen der Wägesignale der Kraftmesszellen zwischen Gewichtskräften unterscheidet, welche auf den Fahrzeugsitz durch lebende Personen einerseits und unbelebte Gegenstände andererseits ausgeübt werden, und ein entsprechendes Ausgangssignal liefert.

12. Vorrichtung nach Anspruch 10 oder 11, **dadurch ge-**

**kennzeichnet, dass** die Auswerteschaltung eine Schnittstelle aufweist, über welche im Fahrzeug zur Verfügung stehende Fahrzeugdaten empfangbar sind.

13. Vorrichtung nach einem der voranstehenden Ansprüche, **dadurch gekennzeichnet, dass** die Auswertschaltung eine Diagnosefunktion umfasst, mittels welcher die Funktionstüchtigkeit der Kraftmesszellen überprüfbar ist.

14. Vorrichtung nach einem der voranstehenden Ansprüche, **dadurch gekennzeichnet, dass** die Auswerteschaltung einen Datenspeicher umfasst, in welchem Wägesignale, Ausgangssignale und/oder sonstige von der Auswerteschaltung empfangenen Messsignale für einen vorgegebenen Zeitraum speicherbar sind.

15. Vorrichtung nach Anspuch 14, **dadurch gekennzeichnet, dass** dem Datenspeicher ein Speicherbereich zugeordnet ist, in welchem zu gespeicherten Signalen korrelierende Zeitsignale speicherbar sind.

16. Fahrzeugsitz umfassend eine Vorrichtung gemäß einem oder mehreren der Ansprüche 1 bis 15.

17. Verfahren zur Erfassung und Aufbereitung von auf einen Fahrzeugsitz wirkenden Gewichtskräften zum Bestimmen der Masse eines auf einer Sitzfläche des Fahrzeugsitzes sitzenden Insassen, umfassend die Schritte: Erfassung von Wägesignalen von am Fahrzeugsitz angeordneten Sensoren und Bildung eines absoluten Wägegesamtsignals aus den Wägesignalen, welches der von der Masse des Insassen auf den Sitz ausgeübten Gewichtskraft entspricht, wobei

- die Erfassung von Wägesignalen das Erfassen von Wägesignalen von mindestens drei an Last tragenden Teilen des Fahrzeugsitzes an Eckpunkten einer imaginären polygonalen Fläche angeordneten Kraftmesszellen mittels einer elektronischen Auswerteschaltung beinhaltet; und dass das Verfahren ferner die Schritte umfasst:

- Bestimmung der Lage des Schwerpunkts der von der Masse des Insassen auf die Sitzfläche ausgeübten Gewichtskraft aus den Wägesignalen;
- Korrelation des absoluten Wägegesamtsignals mit der Lage des Schwerpunktes unter Ermittlung eines Korrekturparameters;
- Abrufen eines Massenkorrekturwertes zur Korrektur von Kraftnebenschlüssen in Abhängigkeit des Korrekturparameters aus einem Datenspeicher, welcher für absolute Wägegesamtsignale und dazu korrelierende Schwerpunktslagen Massenkorrekturwerte gespeichert enthält; und
- Berechnung der Masse des Insassen aus dem absoluten Wägegesamtsignal und dem Massenkorrekturwert; und
- Korrektur des Nullpunktes der Wägesignale basierend auf Wägesignalen der Kraftmesszellen, bei unbelastetem Fahrzeugsitz;

- wobei die Nullpunktskorrektur so vorgenommen wird, dass für jede Kraftmesszelle ein zuletzt gültiges Wägesignal $W_L$ bei unbelastetem Fahrzeugsitz gespeichert und mit dem Wägesignals $W_N$ der nachfolgenden gültigen Messung bei unbelastetem Sitz verglichen wird; dass eine Differenz $D = W_N - W_L$ gebildet und darauf hin geprüft wird, ob diese innerhalb eines vorgegebenen Bereichs von Nullpunktsdriftwerten liegt; dass im Falle, dass die Differenz D innerhalb des vorgegebenen Bereichs liegt, diese zu einem in einem Differenzwertspeicher gespeicherten Wert addiert wird; und dass im Falle, dass die Differenz D außerhalb des vorgegebenen Bereichs liegt, diese verworfen wird und der in dem Differenzwertspeicher gespeicherte Wert konstant gehalten wird.

18. Verfahren nach Anspruch 17, **dadurch gekennzeichnet, dass** in vorgegebenen Zeitabständen und/oder bei Eintritt vorgegebener Ereignisse der Verfahrensschritt zur Korrektur des Nullpunktes angestoßen wird.

19. Verfahren nach einem der Ansprüche 17 oder 18, **dadurch gekennzeichnet, dass** das Verfahren einen Diagnosemodus umfasst, in welchem die Funktionsfähigkeit der Kraftmesszellen in vorgegebenen Zeitabständen und/oder bei Eintritt vorgegebener Ereignisse geprüft wird.

20. Verfahren nach Anspruch 19, **dadurch gekennzeichnet, dass** im Diagnosemodus das Auftreten einer Differenz D bei einem Wägesignal außerhalb des vorgegebenen Bereichs erfasst wird und im Falle, dass dies nur für das Wägesignal einer der Kraftmesszellen gilt, ein Alarmsignal erzeugt wird.

21. Verfahren nach Anspruch 20, **dadurch gekennzeichnet, dass** im Diagnosemodus neben dem Alarmsignal ein Signal erzeugt wird, welches die als abweichend erkannte Kraftmesszelle identifiziert.

22. Verfahren nach einem der Ansprüche 17 bis 21, **dadurch gekennzeichnet, dass** die Auswerteschaltung in einem Langzeitaufzeichnungsmodus Wägesignale, Ausgangssignale und/oder sonstige empfangene und/oder erzeugte Signale für einen vorgegebenen gleitenden Zeitraum in einem Datenspeicherbereich aufzeichnet.

23. Verfahren nach Anspruch 22, **dadurch gekennzeichnet, dass** der Langzeitaufzeichnungsmodus eine Statistikfunktion umfasst, mittels welcher die Wägesignale der einzelnen Kraftmesszellen in reguläre Messereignisse und Fälle einer Überlast repräsentierende irreguläre Messereignisse klassifiziert und gezählt werden, wobei beim Erreichen einer vorgegebenen Zahl von Überlastereignissen ein Anzeigesignal erzeugt wird.

24. Verfahren nach Anspruch 23, **dadurch gekennzeichnet, dass** die regulären Messereignissen entsprechenden Wägesignale in mehrere Gewichtsklassen unterteilt werden und dass für jede der Gewichtsklassen die ihr zugeordneten Messereignisse gezählt werden.

25. Verfahren nach einem der Ansprüche 22 bis 24, **dadurch gekennzeichnet, dass** in dem Langzeitaufzeichnungsmodus zusätzlich zur Aufzeichnung der jeweiligen Signale hierzu korrelierende Zeitsignale in einem Datenspeicher aufgezeichnet werden.

26. Verfahren nach einem der Ansprüche 17 bis 25, **dadurch gekennzeichnet, dass** aus zeitlichen Änderungen der Wägesignale der Kraftmesszellen Beschleunigungswerte des Fahrzeugs berechnet werden.

27. Verfahren nach einem der Ansprüche 17 bis 26, **dadurch gekennzeichnet, dass** aus zeitlichen Änderungen der Wägesignale der Kraftmesszellen unter Berücksichtigung der Summenwerte der Wägesignale eine Unterscheidung getroffen wird, ob eine Gewichtskraft auf dem Fahrzeugsitz von einer lebenden Person oder einem unbelebten Gegenstand ausgeübt wird und dass abhängig von dieser Unterscheidung ein Ausgangssignal erzeugt wird.

28. Verfahren nach einem der Ansprüche 17 bis 27, **dadurch gekennzeichnet, dass** von einer Schnittstelle Fahrzeugdaten empfangen werden.

29. Verfahren nach Anspruch 28, **dadurch gekennzeichnet, dass** die empfangenen Fahrzeugdaten Fahrzeuggeschwindigkeitsdaten umfassen und dass aus den Fahrzeuggeschwindigkeitsdaten Beschleunigungswerte ermittelt werden, welche gegebenenfalls mit aus den zeitlichen Änderungen der Wägesignale der Kraftmesszellen berechneten Beschleunigungswerten verglichen werden.

30. Verfahren nach Anspruch 28 oder 29, **dadurch ge-**

**kennzeichnet, dass** die Fahrzeugdaten Daten enthalten, welche das Aufschließen und/oder Abschließen des Fahrzeugs anzeigen und dass der Empfang dieser Daten den Vorgang der Nullpunktskorrektur startet.

31. Verfahren nach einem der Ansprüche 28 bis 30, **dadurch gekennzeichnet, dass** die Fahrzeugdaten das Kalender-Datum umfassen, dass beim Durchführen einer Nullpunktskorrektur die erfolgte Korrektur als Ereignis mit zugehörigem Kalender-Datum abgespeichert wird und dass das aktuell empfangene Kalender-Datum mit dem Kalender-Datum der zuletzt durchgeführten Nullpunktskorrektur verglichen wird.

**Claims**

1. Device for detecting and evaluating a weight exerted by a person sitting on a vehicle seat, comprising sensors arranged on the vehicle seat which in each case generate a weighing signal corresponding to the weight, and an electronic evaluation circuit which receives and preprocesses the weighing signals and generates an output signal based on the weighing signals, wherein

   - the sensors are load cells,
   - there are at least three load cells, which are disposed on load-carrying parts of the vehicle seat at corner points of an imaginary polygonal area; and
   - the electronic evaluation circuit comprises an evaluation function, with which a localization of the centre of gravity of the weight acting on the vehicle seat can be carried out from the individual weighing signals of the at least three load cells, wherein
   - the evaluation circuit comprises a correction function, with which force bypasses can be taken into account in the forming of the output signal,

   **characterized in that** the evaluation circuit comprises a function for automatic zero-drift correction of the weighing signal, and the function for the automatic drift correction comprises a discriminator for differentiating the weighing-signal drift from low loads of a limited time, wherein for each load cell a last-valid weighing signal $W_L$ with the vehicle seat unloaded is stored and is compared with the weighing signal $W_N$ of the subsequently valid measurement with the seat unloaded, a difference $D = W_N - W_L$ is formed, and a check is then made as to whether this lies within a predetermined range of zero drift values, the difference D is added to a value stored in a difference-value memory in the case in which this difference lies within the predetermined range and the difference D is discarded and the value stored in the difference-value memory is kept constant in the case in which this difference lies outside the predetermined range.

2. Device according to Claim 1, **characterized in that** the load cells are disposed in such a way that the force introduction takes place vertically.

3. Device according to Claim 1 or 2, **characterized in that** the load cells comprise an inductively operating force transducer.

4. Device according to Claim 3, **characterized in that** the inductively operating force transducer is a force transducer operating on the eddy current principle.

5. Device according to Claim 4, **characterized in that** the force transducer operating on the eddy current principle is operated in such a way that weighing signals analogous to frequency can be generated.

6. Device according to any of Claims 1 to 5, **characterized in that** the device comprises one or more temperature sensors, the measuring signals of which are received by the evaluation circuit and used for the temperature correction of the weighing signals in the generation of the output signal.

7. Device according to Claim 6, **characterized in that** the device comprises a sensor which is to be disposed in the footwell of the vehicle, generates a force-bypass weighing signal which corresponds to leg placement forces and is received by the evaluation circuit.

8. Device according to any of the preceding claims, **characterized in that** the evaluation circuit comprises a function for forming a sliding mean value.

9. Device according to Claim 8, **characterized in that** the function of the evaluation circuit for forming a sliding mean value comprises a filter function, in order to detect peak values of the weighing signals, induced by acceleration, deceleration and/or vibrations of the vehicle and/or by movements of the person on the vehicle seat, and to discard or use them in a way corresponding to predetermined criteria.

10. Device according to any of Claims 1 to 9, **characterized in that** the evaluation circuit comprises a functional unit for the calculation of acceleration values of the vehicle, which exclusively evaluates changes over time of the weighing signals of the load cells.

11. Device according to Claims 1 to 10, **characterized in that** the evaluation circuit comprises a differentiating function, which differentiates on the basis of the changes over time of the weighing signals of the load cells between weights which are exerted on the vehicle seat by living persons on the one hand and inanimate objects on the other hand, and supplies a corresponding output signal.

12. Device according to Claim 10 or 11, **characterized in that** the evaluation circuit has an interface via which vehicle data available in the vehicle can be received.

13. Device according to any of the preceding claims, **characterized in that** the evaluation circuit comprises a diagnostic function, by means of which the functional capability of the load cells can be checked.

14. Device according to any of the preceding claims, **characterized in that** the evaluation circuit comprises a data memory in which weighing signals, output signals and/or other measuring signals received by the evaluation circuit can be stored for a predetermined period of time.

15. Device according to Claim 14, **characterized in that** the data memory has an associated memory area in which time signals correlating to stored signals can be stored.

16. Vehicle seat comprising a device according to one or more of Claims 1 to 15.

17. Method for detecting and preprocessing weights acting on a vehicle seat for determining the mass of an occupant sitting on a sitting area of the vehicle seat, comprising the steps of:

detecting weighing signals of sensors disposed on the vehicle seat and forming from the weighing signals an absolute overall weighing signal, which corresponds to the weight exerted on the seat by the mass of the occupant, wherein

- the detection of weighing signals includes detecting by means of an electronic evaluation circuit weighing signals of at least three load cells disposed on load-carrying parts of the vehicle seat at corner points of an imaginary polygonal area; and in that the method furthermore comprises the steps of:

- determining from the weighing signals the position of the centre of gravity of the weight exerted on the sitting area by the mass of the occupant;
- correlating the absolute overall weighing signal with the position of the centre of gravity, with a correction parameter being determined;

- calling up a mass correction value for the correction of force bypasses in dependence on the correction parameter from a data memory which contains stored mass correction values for absolute overall weighing signals and centre-of-gravity positions correlating to them; and

- calculating the mass of the occupant from the absolute overall weighing signal and the mass correction value; and

- correcting the zero point of the weighing signals on the basis of weighing signals of the load cells with the vehicle seat unloaded;

- the zero-point correction being performed by storing for each load cell a last-valid weighing signal $W_L$ with the vehicle seat unloaded and comparing this with the weighing signal $W_N$ of the subsequently valid measurement with the seat unloaded;

by a difference $D = W_N - W_L$ being formed, and it then being checked whether this lies within a predetermined range of zero drift values;

by the difference D being added to a value stored in a difference-value memory in the case in which this difference lies within the predetermined range;

and by the difference D being discarded and the value stored in the difference-value memory kept constant in the case in which this difference lies outside the predetermined range.

18. Method according to claim 17, **characterized in that** the method step of correction of the zero point is initiated at predetermined time intervals and/or when predetermined events occur.

19. The method according to either of Claims 17 and 18, **characterized in that** the method comprises a diagnosing mode, in which the functional capability of the load cells is checked at predetermined time intervals and/or when predetermined events occur.

20. The method according to Claim 19, **characterized in that**, in the diagnosing mode, the occurrence of a difference D is detected in the case of a weighing signal outside the predetermined range and an alarm signal is generated in the case in which this applies only to the weighing signal of one of the load cells.

21. Method according to Claim 20, **characterized in that** a signal which identifies the load cell detected as different is generated apart from the alarm signal in the diagnosing mode.

22. Method according to any of Claims 17 to 21, **characterized in that**, in a long-term recording mode, the evaluation circuit records for a predetermined sliding time period in an area of the data memory weighing signals, output signals and/or other signals received and/or generated.

23. Method according to Claim 22, **characterized in that** the long-term recording mode comprises a statistical function, by means of which the weighing signals of the individual load cells are classified into regular measuring events and irregular measuring events, representing cases of overload, and these are counted, an indicating signal being generated when a predetermined number of overload events is reached.

24. Method according to Claim 23, **characterized in that** the weighing signals corresponding to regular measuring events are subdivided into a number of weight classes and **in that** for each of the weight classes the measuring events associated with them are counted.

25. Method according to any of Claims 22 to 24, **characterized in that**, in the long-term recording mode, in addition to the recording of the respective signals, time signals correlating to the respective signals are recorded in a data memory.

26. Method according to any of Claims 17 to 25, **characterized in that** acceleration values of the vehicle are calculated from changes over time of the weighing signals of the load cells.

27. Method according to any of Claims 17 to 26, **characterized in that**, taking into account the summated values of the weighing signals, changes over time of the weighing signals of the load cells are used to differentiate whether a weight is exerted on the vehicle seat by a living person or an inanimate object, and **in that** an output signal is generated depending upon this differentiation.

28. Method according to any of Claims 17 to 27, **characterized in that** vehicle data are received by an interface.

29. Method according to Claim 28, **characterized in that** the received vehicle data comprise vehicle speed data and **in that** the vehicle speed data are used to determine acceleration values, which are optionally compared with the acceleration values calculated from the changes over time of the weighing signals of the load cells.

**30.** Method according to Claim 28 or 29, **characterized in that** the vehicle data contain data which indicate the unlocking and/or locking of the vehicle and **in that** the reception of these data starts the process of zero-point correction.

**31.** Method according to any of Claims 28 to 30, **characterized in that** the vehicle data comprise the calendar date, **in that**, when carrying out a zero-point correction, the correction performed is stored as an event with an associated calendar date and **in that** the currently received calendar date is compared with the calendar date of the last-performed zero-point correction.

**Revendications**

**1.** Dispositif pour détecter et évaluer une force de poids appliquée par une personne assise sur un siège de véhicule, comprenant des capteurs disposés sur le siège du véhicule et qui produisent chacun un signal de pesée correspondant à la force de poids, et un circuit d'évaluation électronique, qui reçoit les signaux de pesée et les traite et produit un signal de sortie basé sur les signaux de pesée, dans lequel

- les capteurs sont des cellules dynamométriques de force,
- il est prévu au moins trois cellules dynamométriques, qui sont disposées sur des parties, portant une charge, du siège du véhicule au niveau de sommets d'une surface polygonale imaginaire; et
- le circuit d'évaluation électronique comprend une fonction d'évaluation, avec laquelle une localisation du centre de gravité de la force de poids agissant sur le siège du véhicule, peut être réalisée à partir des différents signaux de pesée des au moins trois cellules dynamométriques,
- le circuit d'évaluation comprend une fonction de correction, avec laquelle des dérivations de force peuvent être prises en compte lors de la formation du signal de sortie, et

**caractérisé en ce que** le circuit d'évaluation comprend une fonction de correction automatique de dérive du point zéro du signal de pesée,
et **en ce que** la fonction de correction automatique de dérive comprend un discriminateur pour distinguer la dérive du signal de pesée vis-à-vis de faibles charges limitées dans le temps, dans lequel pour chaque cellule dynamométrique, un signal de pesée $W_L$, valable en dernier lieu, est mémorisé dans le cas où le siège du véhicule n'est pas chargé et est comparé au signal de pesée $W_N$ de la mesure valable suivante dans le cas où le siège n'est pas chargé; une différence $D = W_N - W_L$ est formée et un contrôle est effectué pour déterminer si cette différence se situe à l'intérieur d'une zone prédéterminée de valeurs de dérive du point zéro;
dans le cas où la différence D est située à l'intérieur de la zone prédéterminée, cette différence est ajoutée à une valeur mémorisée dans une mémoire de valeurs différentielles; et
dans le cas où la différence D est située à l'extérieur de la zone prédéterminée, celle-ci est rejetée et la valeur mémorisée dans la mémoire de valeurs de différence est maintenue constante.

**2.** Dispositif selon la revendication 1, **caractérisé en ce que** les cellules dynamométriques sont disposées de telle sorte que l'application de la force s'effectue verticalement.

**3.** Dispositif selon la revendication 1 ou 2, **caractérisé en ce que** les cellules dynamométriques comprennent un enregistreur de force travaillant de façon inductive.

**4.** Dispositif selon la revendication 3, **caractérisé en ce que** l'enregistreur de force travaillant de façon inductive est un enregistreur de force travaillant selon le principe des courants de Foucault.

**5.** Dispositif selon la revendication 4, **caractérisé en ce que** l'enregistreur de force, qui travaille selon le principe des courants de Foucault, fonctionne de telle sorte que des signaux de pesée analogues en fréquence peuvent être produits.

**6.** Dispositif selon l'une des revendications 1 à 5, **caractérisé en ce que** le dispositif comprend un ou plusieurs capteurs de température, dont les signaux de mesure sont reçus par le circuit d'évaluation et sont utilisés pour corriger la température des signaux de pesée lors de l'obtention du signal de sortie.

**7.** Dispositif selon la revendication 6, **caractérisé en ce que** le dispositif comprend un capteur qui doit être disposé dans l'espace au niveau des pieds dans le véhicule et qui produit un signal de pesée de dérivation de force qui correspond à des forces d'appui des jambes et qui est reçu par le circuit d'évaluation.

**8.** Dispositif selon l'une des revendications précédentes, **caractérisé en ce que** le circuit d'évaluation possède une fonction pour former une valeur moyenne glissante.

**9.** Dispositif selon la revendication 8, **caractérisé en ce que** la fonction du circuit d'évaluation pour la formation d'une valeur moyenne glissante comprend une fonction de filtre, pour identifier les valeurs de pointe des signaux de pesée, provoqués par une accélération, un freinage et/ou des vibrations du véhicule et/ou des déplacements de la personne sur le siège du véhicule et pour rejeter ou poursuivre l'évaluation des critères prédéterminés de façon correspondante.

10. Dispositif selon l'une des revendications 1 à 9, **caractérisé en ce que** le circuit d'évaluation comprend une unité fonctionnelle servant à calculer des valeurs d'accélération du véhicule, qui évalue exclusivement des variations dans le temps des signaux de pesée des cellules dynamométriques.

11. Dispositif selon les revendications 1 à 10, **caractérisé en ce que** le circuit d'évaluation comprend une fonction de différentiation qui, sur la base des variations dans le temps des signaux de pesée des cellules dynamométriques établit une distinction entre des forces de poids, qui sont exercées sur le siège du véhicule d'une part par des êtres vivants et d'autre part par des objets inanimés, et délivre un signal de sortie correspondant.

12. Dispositif selon la revendication 10 ou 11, **caractérisé en ce que** le circuit d'évaluation possède une interface, au moyen de laquelle des données disponibles du véhicule peuvent être reçues dans le véhicule.

13. Dispositif selon l'une des revendications précédentes, **caractérisé en ce que** le circuit d'évaluation comprend une fonction de diagnostic, à l'aide de laquelle la capacité de fonctionnement des cellules dynamométriques peut être testée.

14. Dispositif selon l'une des revendications précédentes, **caractérisé en ce que** le circuit d'évaluation comprend une mémoire de données, dans laquelle des signaux de pesée, des signaux de sortie et/ou d'autres signaux de mesure reçus de la part du circuit d'évaluation peuvent être mémorisés pendant un intervalle de temps prédéterminé.

15. Dispositif selon la revendication 14, **caractérisé en ce qu'**à la mémoire de données est associée une zone de mémoire, dans laquelle peuvent être mémorisés des signaux temporels corrélés à des signaux mémorisés.

16. Siège de véhicule comprenant un dispositif selon une ou plusieurs des revendications 1 à 15.

17. Procédé pour détecter et évaluer une force de poids appliquée par une personne assise sur un siège de véhicule, comprenant des capteurs disposés sur le siège du véhicule, et qui produisent chacun un signal de pesée correspond à la force de poids, et un circuit d'évaluation électronique, qui reçoit des signaux de pesée et les traite et produit un signal de sortie basé sur les signaux de pesée, dans lequel

- la détection de signaux de pesée par trois cellules dynamométriques disposées au moins en trois parties, qui portent une charge, du siège du véhicule au niveau de sommets d'une surface polygonale imaginaire, à l'aide d'un circuit d'évaluation électronique; et que le procédé comprend en outre les étapes consistant à:

- déterminer la position du centre de gravité de la force de poids, appliquée par la masse du passager assis sur la surface de siège, à partir des signaux de pesée;
- la corrélation du signal absolu total de pesée avec la position du centre de gravité moyennant la détermination d'un paramètre de correction;
- l'appel d'une valeur de correction de masse pour corriger des dérivations de force en fonction du paramètre de correction pouvant être tiré d'une mémoire de données, qui contient à l'état mémorisé, des valeurs de correction de masse pour des signaux totaux absolus de pesée et les positions de points de centre de gravité qui y sont corrélés; et
- le calcul de la masse du passager assis à partir du signal global absolu de pesée et de la valeur de correction de masse; et
- la correction du point de zéro des signaux de pesée sur la base de signaux de pesée des cellules dynamométriques, pour un siège de véhicule non chargé;

- selon lequel la correction du point zéro est réalisée de telle sorte que pour chaque cellule dynamométrique, un signal de pesée $W_L$, valable en dernier lieu, est mémorisé dans le cas où le siège du véhicule n'est pas chargé et est comparé au signal de pesée $W_N$ de la mesure valable suivante dans le cas où le siège n'est pas chargé; qu'une différence $D = W_N - W_L$ est formée et qu'un contrôle est effectué pour déterminer si cette différence se situe à l'intérieur d'une gamme prédéterminée de valeurs de dérive du point zéro; que dans le cas où la différence D est située à l'intérieur de la zone prédéterminée, cette différence est ajoutée à une valeur mémorisée dans une mémoire de valeurs différentielles; et que dans le cas où la différence D est située à l'extérieur de la gamme prédéterminée, celle-ci est rejetée et la valeur mémorisée dans la mémoire de valeurs de différence est maintenue constante.

18. Procédé selon la revendication 17, **caractérisé en**

**ce qu'**à des intervalles de temps prédéterminés et/ou lors de l'apparition de phénomènes prédéterminés, l'étape opératoire pour la correction du point de zéro est déclenchée.

19. Procédé selon l'une des revendications 17 ou 18, **caractérisé en ce que** le procédé comprend un mode de diagnostic, dans lequel la capacité fonctionnelle des cellules dynamométriques dans des intervalles prédéterminés et/ou lors de l'apparition de phénomènes prédéterminés est contrôlée.

20. Procédé selon la revendication 19, **caractérisé en ce que** dans le mode de diagnostic, l'apparition d'une différence D est détecté dans le cas où le signal de pesée est à l'extérieur de la gamme prédéterminée et dans le cas où ceci n'est valable que pour le signal de pesée de l'une des cellules dynamométriques, un signal d'alarme est produit.

21. Procédé selon la revendication 20, **caractérisé en ce que** dans le mode de diagnostic, un signal, qui identifie la cellule dynamométrique identifiée comme présentant une déviation, est produite en plus du signal d'alarme.

22. Procédé selon l'une des revendications 17 à 21, **caractérisé en ce que** le circuit d'évaluation enregistre, pendant un mode d'enregistrement de longue durée, des signaux de pesée, des signaux de sortie et/ou d'autres signaux reçus et/ou produits pendant un intervalle de temps glissant prédéterminé dans une zone de mémoire de données.

23. Procédé selon la revendication 22, **caractérisé en ce que** le mode d'enregistrement de longue durée comprend une fonction statistique, au moyen de laquelle les signaux de pesée des différentes cellules dynamométriques sont classés et comptés en des phénomènes réguliers de mesure et en des phénomènes irréguliers de mesure, représentant des cas de surcharge, auquel cas un signal indicateur est produit lorsqu'un nombre prédéterminé d'événements de surcharge est atteint.

24. Procédé selon la revendication 23, **caractérisé en ce que** les signaux de pesée correspondant à des phénomènes réguliers de mesure, sont divisés en plusieurs classes de poids et que pour chacune des classes de poids, on compte les événements de mesure qui y sont associés.

25. Procédé selon l'une des revendications 22 à 24, **caractérisé en ce que** dans le mode d'enregistrement de longue durée, en plus de l'enregistrement des signaux considérés, les signaux temporels corrélés à ces signaux sont enregistrés dans une mémoire de données.

26. Procédé selon l'une des revendications 17 à 25, **caractérisé en ce que** les valeurs d'accélération du véhicule sont calculées à partir de variations dans le temps des signaux de pesée des cellules dynamométriques.

27. Procédé selon l'une des revendications 17 à 26, **caractérisé en ce qu'**à partir de variations dans le temps des signaux de pesée des cellules dynamométriques, une différenciation est exécutée, en tenant compte des valeurs sommes des signaux de pesée, pour déterminer si une force de poids est appliquée sur le siège du véhicule par un être vivant ou un objet inanimé et qu'un signal de sortie est produit en fonction de cette différenciation.

28. Procédé selon l'une des revendications 17 à 27, **caractérisé en ce que** des données du véhicule sont reçues par une interface.

29. Procédé selon la revendication 28, **caractérisé en ce que** les données reçues du véhicule comprennent des données de vitesse du véhicule et que les données d'accélération, qui sont éventuellement comparées à des valeurs d'accélération calculées à partir des variations dans le temps des signaux de pesée des cellules dynamométriques, sont déterminées à partir des données de vitesse du véhicule.

30. Procédé selon la revendication 28 ou 29, **caractérisé en ce que** les données du véhicule contiennent des données, qui indiquent l'ouverture et/ou la fermeture du véhicule et que la réception de ces données fait démarrer le processus de correction de point de zéro.

31. Procédé selon l'une des revendications 28 à 30, **caractérisé en ce que** les données du véhicule comprennent la date du calendrier, que lors de l'exécution d'une correction de point de zéro, la correction exécutée est mémorisée en tant qu'événement avec la date associée du calendrier, et que la date du calendrier actuellement reçue est comparée à la date de calendrier de la correction de point de zéro exécutée en dernier lieu.

FIG.1

FIG.3

EP 1 383 667 B2

FIG.2B

FIG.2A

21

FIG.4

FIG.5

FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5739757 A
- DE 3809074 A1
- DE 4420691 C1
- US 6070115 A